(19) Europäisches Patentamt
European Patent Office
Office européen des brevets

(11) **EP 4 787 857 A1**

(12) **EUROPEAN PATENT APPLICATION**
published in accordance with Art. 153(4) EPC

(43) Date of publication:
**05.08.2026 Bulletin 2026/32**

(21) Application number: **23953671.7**

(22) Date of filing: **28.09.2023**

(51) International Patent Classification (IPC):
*H04N 19/567* ^(2014.01)

(52) Cooperative Patent Classification (CPC):
**H04N 19/567**

(86) International application number:
**PCT/CN2023/122609**

(87) International publication number:
**WO 2025/065522 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **WANG, Fan**
**Dongguan, Guangdong 523860 (CN)**

(74) Representative: **Taor, Simon Edward William**
**Venner Shipley LLP**
**TIDE Bankside**
**8 Emerson Street**
**London SE1 9DU (GB)**

(54) **CODING METHOD AND APPARATUS, DECODING METHOD AND APPARATUS, CODER, DECODER, CODE STREAM, DEVICE, AND STORAGE MEDIUM**

(57)    An encoding method and apparatus, a decoding method and apparatus, an encoder, a decoder, a bitstream, a device, and a storage medium are disclosed in embodiments of the disclosure. The decoding method includes the following. A first difference in sample values between a first reference block pointed to by a first candidate motion vector (MV) of a current block and a second reference block pointed to by a second candidate MV of the current block is determined. A second difference in sample values between a template of the current block and a template of the first reference block is determined. A third difference in sample values between the template of the current block and a template of the second reference block is determined. A first prediction MV and a second prediction MV of the current block are obtained by performing motion estimation on the current block at least according to the first difference, the second difference, and the third difference. A prediction block of the current block is obtained by performing motion compensation on the current block according to the first prediction MV and the second prediction MV.

FIG. 9

**Description**

TECHNICAL FIELD

Embodiments of the disclosure relate to the video coding technology, and relate to, but are not limited to, an encoding method and apparatus, a decoding method and apparatus, an encoder, a decoder, a bitstream, a device, and a storage medium.

BACKGROUND

In the field of video coding, how to enhance video compression efficiency is crucial. In a digitization process of a picture and a video, a large amount of data redundancy is generated, which makes video compression technology possible. Since there is high similarity between neighbouring pictures in the video, an inter prediction method is used in the video coding technology to eliminate temporal redundancy between the neighbouring pictures, thereby enhancing coding efficiency. However, inter prediction in existing video coding standards has a problem of poor video coding performance. Therefore, it is still of a certain significance to study how to further improve the accuracy of inter prediction to enhance the video coding performance.

SUMMARY

In view of this, an encoding method and apparatus, a decoding method and apparatus, an encoder, a decoder, a bitstream, a device, and a storage medium provided in embodiments of the disclosure can improve the accuracy of inter prediction to enhance the video coding performance. The encoding method and apparatus, the decoding method and apparatus, the encoder, the decoder, the bitstream, the device, and the storage medium provided in embodiments of the disclosure are achieved as follows.

According to an aspect of embodiments of the disclosure, a decoding method is provided. The decoding method is applied to a decoder and includes the following. A first difference in sample values between a first reference block pointed to by a first candidate motion vector (MV) of a current block and a second reference block pointed to by a second candidate MV of the current block is determined. A second difference in sample values between a template of the current block and a template of the first reference block is determined. A third difference in sample values between the template of the current block and a template of the second reference block is determined. A first prediction MV and a second prediction MV of the current block are obtained by performing motion estimation on the current block at least according to the first difference, the second difference, and the third difference. A prediction block of the current block is obtained by performing motion compensation on the current block according to the first prediction MV and the second prediction MV.

According to an aspect of embodiments of the disclosure, an encoding method is provided. The encoding method is applied to an encoder and includes the following. A first difference in sample values between a first reference block pointed to by a first candidate MV of a current block and a second reference block pointed to by a second candidate MV of the current block is determined. A second difference in sample values between a template of the current block and a template of the first reference block is determined. A third difference in sample values between the template of the current block and a template of the second reference block is determined. A first prediction MV and a second prediction MV of the current block are obtained by performing motion estimation on the current block at least according to the first difference, the second difference, and the third difference. A prediction block of the current block is obtained by performing motion compensation on the current block according to the first prediction MV and the second prediction MV.

According to an aspect of embodiments of the disclosure, a decoding apparatus is provided. The apparatus is applied to a decoder and includes a first determining module, a second determining module, a third determining module, a first motion estimation module, and a first motion compensation module. The first determining module is configured to determine a first difference in sample values between a first reference block pointed to by a first candidate MV of a current block and a second reference block pointed to by a second candidate MV of the current block. The second determining module is configured to determine a second difference in sample values between a template of the current block and a template of the first reference block. The third determining module is configured to determine a third difference in sample values between the template of the current block and a template of the second reference block. The first motion estimation module is configured to obtain a first prediction MV and a second prediction MV of the current block by performing motion estimation on the current block at least according to the first difference, the second difference, and the third difference. The first motion compensation module is configured to obtain a prediction block of the current block by performing motion compensation on the current block according to the first prediction MV and the second prediction MV.

According to an aspect of embodiments of the disclosure, a decoder is provided. The decoder includes a first memory and a first processor. The first memory is configured to store a computer program executable by the first processor. The first processor is configured to perform the decoding method in embodiments of the disclosure when executing the computer program.

According to an aspect of embodiments of the disclosure, an encoding apparatus is provided. The apparatus is applied to an encoder and includes a fourth determining module, a fifth determining module, a sixth determining module, a second motion estimation module, and a second motion compensation module. The fourth determining module is configured to determine a first difference in sample values between a first reference block pointed to by a first candidate MV of a current block and a second reference block pointed to by a second candidate MV of the current block. The fifth determining module is configured to determine a second difference in sample values between a template of the current block and a template of the first reference block. The sixth determining module is configured to determine a third difference in sample values between the template of the current block and a template of the second reference block. The second motion estimation module is configured to obtain a first prediction MV and a second prediction MV of the current block by performing motion estimation on the current block at least according to the first difference, the second difference, and the third difference. The second motion compensation module is configured to obtain a prediction block of the current block by performing motion compensation on the current block according to the first prediction MV and the second prediction MV.

According to an aspect of embodiments of the disclosure, an encoder is provided. The encoder includes a second memory and a second processor. The second memory is configured to store a computer program executable by the second processor. The second processor is configured to perform the encoding method in embodiments of the disclosure when executing the computer program.

According to an aspect of embodiments of the disclosure, a bitstream is provided. The bitstream is obtained according to the encoding method in embodiments of the disclosure.

According to an aspect of embodiments of the disclosure, an electronic device is provided. The electronic device includes a processor and a computer-readable storage medium. The processor is adapted to executing a computer program. The computer-readable storage medium is configured to store the computer program which, when executed by the processor, is operable to implement the encoding method in embodiments of the disclosure, or when executed by the processor, is operable to implement the decoding method in embodiments of the disclosure.

According to an aspect of embodiments of the disclosure, a computer-readable storage medium is provided. The computer-readable storage medium is configured to store a computer program which, when executed, is operable to implement the encoding method in embodiments of the disclosure, or when executed, is operable to implement the decoding method in embodiments of the disclosure.

In embodiments of the disclosure, during motion estimation on a current block, not only a second difference in sample values between a template of the current block and a template of a first reference block pointed to by a first candidate MV of the current block as well as a third difference in sample values between the template of the current block and a template of a second reference block pointed to by a second candidate MV of the current block are used, but also a first difference in sample values between the first reference block pointed to by the first candidate MV and the second reference block pointed to by the second candidate MV is taken into consideration. As such, it is conducive to improving the accuracy of motion estimation on the current block, i.e., the accuracy of a first prediction MV and a second prediction MV of the current block, thereby improving the accuracy of inter prediction for the current block and enhancing the video coding performance.

BRIEF DESCRIPTION OF THE DRAWINGS

The accompanying drawings herein, which are incorporated in and constitute a part of the specification, illustrate embodiments consistent with the disclosure, and together with the specification, are intended to describe technical solutions of the disclosure. Apparently, the accompanying drawings described below are merely some embodiments of the disclosure. Based on these drawings, those of ordinary skill in the art can also obtain other drawings without creative effort.

The flowchart in the accompanying drawings is only an example description, does not necessarily include all contents and operations/steps, and is not necessarily performed in the order illustrated. For example, some operations/-steps can also be decomposed, and some operations/steps can be merged or partially merged. Therefore, the actual execution order may vary according to actual needs.

FIG. 1 is a schematic diagram of a basic process of a video codec.

FIG. 2 is a schematic structural diagram of a classic group of pictures (GOP) for random access (RA).

FIG. 3 is an example of high efficiency video coding (HEVC).

FIG. 4 is a schematic diagram illustrating positions corresponding to motion information in a merge candidate list to which a merge mode may be introduced.

FIG. 5 is a schematic diagram illustrating a motion vector (MV) relationship among a collocated reference picture col_pic, a reference picture of a collocated block col_ref, a current picture curr_pic, and a reference picture of a current block curr_ref.

FIG. 6 is a schematic diagram illustrating motion vector differences (MVDs) distributed in a single horizontal direction or a single vertical direction.

FIG. 7 is a schematic diagram illustrating mirrored movement of MVs of two reference pictures.

FIG. 8 is a schematic diagram illustrating a principle of template matching (TM)-based inter prediction.

FIG. 9 is a schematic flowchart illustrating implementation of an encoding method provided in embodiments of the disclosure.

FIG. 10 is schematic flowchart 1 illustrating implementation of a method for determining a first prediction MV and a second prediction MV provided in embodiments of the disclosure.

FIG. 11 is schematic flowchart 2 illustrating implementation of a method for determining a first prediction MV and a second prediction MV provided in embodiments of the disclosure.

FIG. 12 is schematic flowchart 3 illustrating implementation of a method for determining a first prediction MV and a second prediction MV provided in embodiments of the disclosure.

FIG. 13 is a schematic flowchart illustrating implementation of a decoding method provided in embodiments of the disclosure.

FIG. 14 is a schematic structural diagram of a decoding apparatus provided in embodiments of the disclosure.

FIG. 15 is a schematic structural diagram of an encoding apparatus provided in embodiments of the disclosure.

FIG. 16 is a schematic structural diagram of an encoder provided in embodiments of the disclosure.

FIG. 17 is a schematic structural diagram of a decoder provided in embodiments of the disclosure.

## DETAILED DESCRIPTION

In order to make purposes, technical solutions, and advantages of embodiments of the disclosure clearer, the following will further describe in detail specific technical solutions of the disclosure with reference to the accompanying drawings in embodiments of the disclosure. Embodiments hereafter are for illustration of the disclosure and are not intended to limit the scope of the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" "this embodiment", "embodiments of the disclosure", and examples, etc., describes a subset of all possible embodiments, but it may be understood that "some embodiments" may refer to the same or different subsets of all possible embodiments and may be combined with each other without conflict.

The terms "first, second, and third" appearing in embodiments of the disclosure are merely used for illustrating and distinguishing the described objects and indicate neither a specific order nor a particular limitation to the number (quantity) of devices in embodiments of the disclosure, which cannot constitute any limitation on embodiments of the disclosure.

The codec architecture and the service scenario described in embodiments of the disclosure are for more clearly describing the technical solutions of embodiments of the disclosure, and do not constitute a limitation on the technical solutions provided in embodiments of the disclosure. It is apparent to those of ordinary skill in the art that as the codec architecture evolves and new service scenarios emerge, the technical solutions provided in embodiments of the disclosure are equally applicable to similar technical problems.

A block-based hybrid coding framework is adopted in most video coding standards. Each picture, sub-picture, or frame in a video is partitioned into square largest coding units (LCUs) or coding tree units (CTUs) of the same size (for example, 256x256, 128x128, 64x64, etc.). Each LCU or CTU can be partitioned into rectangular coding units (CUs) according to a certain rule. The CU may be further partitioned into prediction units (PUs), transform units (TUs), and the like. The hybrid coding framework includes modules for such as prediction, transform, quantization, entropy coding, and in-loop filtering. The prediction module includes intra prediction and inter prediction. The inter prediction includes motion estimation and motion compensation. Since there is strong correlation between neighbouring samples in a picture of a video, an intra prediction method is used in the video coding technology to eliminate spatial redundancy between the neighbouring samples. Since there is high similarity between neighbouring pictures in the video, an inter prediction method is used in the video coding technology to eliminate temporal redundancy between the neighbouring pictures, thereby enhancing coding efficiency.

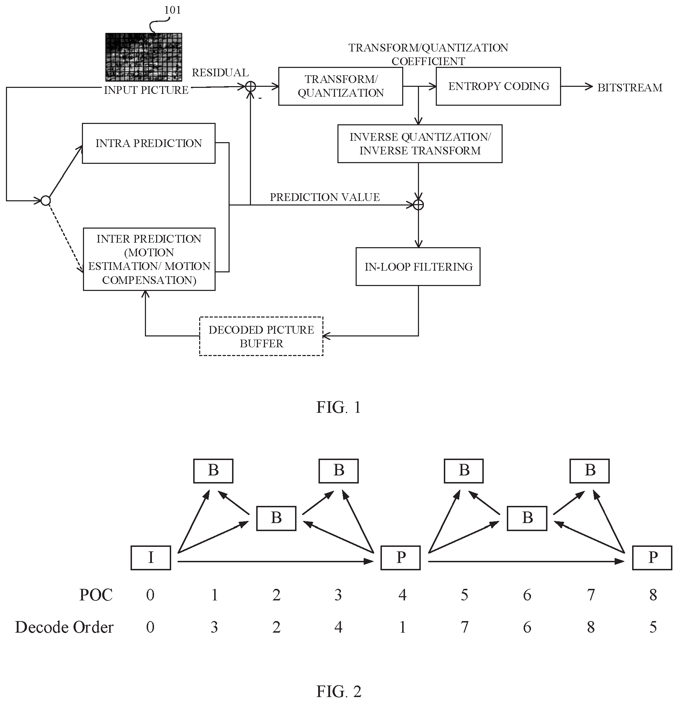

A basic process of a video codec is illustrated in FIG. 1. At the encoding end, an input picture 101 is partitioned into blocks. The intra prediction or the inter prediction is applied to a current block to generate a prediction block of the current block. The prediction block is subtracted from an original picture of the current block to obtain a residual block. The residual block is then subject to transform and quantization to generate a quantization coefficient matrix. The quantization coefficient matrix is entropy-encoded and output to a bitstream. At the decoding end, the intra prediction or the inter prediction is applied to the current block to generate the prediction block of the current block. In addition, the quantization coefficient matrix is parsed out from the bitstream. The quantization coefficient matrix is inverse-quantized and inverse-transformed to obtain the residual block, which is added to the prediction block to obtain a reconstructed block. The reconstructed blocks form a reconstructed picture. The reconstructed picture is in-loop filtered on a picture or block basis to obtain a decoded picture. The encoding end also requires similar operations as the decoding end to obtain the decoded picture. The decoded picture may be used as a reference picture in inter prediction for subsequent pictures. Block partition information and mode information or parameter information such as for prediction, transform, quantization, entropy coding, and in-loop filtering, determined at the encoding end, may need to be output to the bitstream if necessary. The decoding end determines the same block partition information and mode information or parameter information such as for prediction, transform, quantization, entropy coding, and in-loop filtering as the encoding end through parsing and analysis based on available information, ensuring that the decoded picture obtained by the encoding end is the same as the decoded picture obtained by the decoding end. The decoded picture obtained by the encoding end is also typically referred to as "reconstructed picture". During prediction, the current block may be partitioned into PUs, and during transform, the current block may be partitioned into TUs. The partition for the PUs may be different from the partition for the TUs. The above is the basic process of the video codec under the block-based hybrid coding framework. With the development of technology, some modules or operations of the framework or process may be optimized. The embodiments of the disclosure are applicable to the basic process of the video codec under the block-based hybrid coding framework, but are not limited to this framework or process.

The current block may be a current CU or a current PU, etc. Due to requirements of parallel processing, a picture may be partitioned into slices, etc. Slices in the same picture may be processed in parallel, that is, there is no data dependency between the slices. The term "frame" is a common expression and generally may mean that a frame is a picture. In embodiments of the disclosure, the frame may also be understood as a picture or a slice.

The temporal correlation is used for inter prediction to eliminate redundancy. To make the stuttering invisible to the human eye, a common video frame rate may be 30 pictures per second, 50 pictures per second, 60 pictures per second, or even 120 pictures per second. In such a video, the correlation between neighbouring pictures in the same scene is very high, and the inter prediction technology uses this correlation to predict the current content to-be-encoded with reference to the content of a coded picture. The inter prediction can greatly enhance the coding performance.

The most basic inter prediction method is translational prediction. For the translational prediction, assuming that the current content to-be-predicted is translated between a current picture and a reference picture, for example, the content of a current block (a CU or a PU) is translated between the current picture and the reference picture, then this content may be found from the reference picture based on a motion vector (MV) and used as a prediction block of the current block. The translation motion accounts for a large proportion in the video, and the static background, the whole translational object, and the translation of the lens may all be processed by the translational prediction. However, some contents in a natural video may be not obtained by a simple translation, for example, there are some subtle changes during the translation, including changes in shape and colour. In bi-directional prediction, two reference blocks are found from the reference picture, and weighted average is performed on the two reference blocks to obtain a prediction block as similar as possible to the current block. For example, for some scenes, a reference block before the current picture and a reference block after the current picture are found respectively, and weighted average is performed on the two reference blocks, and a result obtained therefrom may be more like the current block than that obtained by using a single reference block. Based on the bi-directional prediction, the compression performance can be further enhanced on the basis of unidirectional prediction.

Picture order count (POC) may serve as an identifier for a picture. In a video sequence, each picture has a unique POC. Herein, it is considered that a POC order is the same as a display order. For a P picture (P frame), only a reference picture before the current picture in POC can be used for prediction. A current reference picture has only one reference picture list, represented by RPL0. Herein, RPL may be understood as an abbreviation for a reference picture list. Reference pictures in the reference picture list RPL0 are all before the current picture in POC. Previously, for a B picture (B frame), the reference picture before the current picture in POC and a reference picture after the current picture in POC can be used for prediction. The B picture has two reference picture lists, represented by RPL0 and RPL1 respectively. A configuration method is that reference pictures in RPL0 are all before the current picture in POC and reference pictures in RPL1 are all after the current picture in POC. For a current block, reference can be made to only one reference block of a certain picture in RPL0, which is also known as forward prediction; or reference can be made to only one reference block of a certain picture in RPL1, which is also known as backward prediction; or reference can be made to both the reference block of the certain picture in RPL0 and the reference block of the certain picture in RPL1, which is also known as bi-directional prediction. A simple method for referring to two reference blocks is to average samples at all corresponding positions of the two reference blocks to generate the prediction block of the current block. Later, for the B picture, the restriction that the reference pictures in RPL0 are all before the current picture in POC and the reference pictures in RPL1 are all after the current picture in POC no longer exists. Therefore, RPL0 may also contain the reference picture after the current picture in POC, and RPL1 may also contain the reference picture before the current picture in POC. As such, for the current block, reference can also be made to reference pictures that are all before or all after the current picture in POC. Such a B picture is also referred to as a generalized B picture.

A coding order under the random access (RA) configuration is different from the POC order. Therefore, for the B picture, reference can be made to information before the current picture and information after the current picture, thereby significantly enhancing the coding performance. A structure of a classic group of pictures (GOP) for RA is illustrated in FIG. 2.

Arrows in FIG. 2 represent reference relationships. An I picture does not require a reference picture. After an I picture with POC 0 is decoded, a P picture with POC 4 is decoded with reference to the I picture with POC 0. Then, a B picture with POC 2 is decoded with reference to the I picture with POC 0 and the P picture with POC 4, and so on.

A coding order under the low delay (LD) configuration is the same as the POC order. Therefore, for the current picture, reference can be made to only the information before the current picture. The LD configuration further includes low delay P (LDP) and low delay B (LDB). LDP refers to the conventional LD configuration. A typical structure of LDP is IPPP..., which means that an I picture is first coded and the following pictures are all P pictures. A typical structure of LDB is IBBB..., and the difference from LDP is that each inter picture is a B picture. That is, two reference picture lists are used, and for the current block, reference can be made to both the reference block of the certain picture in RPL0 and the reference block of the certain picture in RPL1.

Generally, the RA configuration achieves higher compression efficiency than the LD configuration, and the LDB configuration achieves higher compression efficiency than the LDP configuration. For one thing, this is because for the bi-directional prediction, reference can be made to backward information. For another, this is because for the bi-directional prediction, some technologies such as weighted average can be used to reduce the prediction error.

A reference picture list for the current picture may contain up to several reference pictures, such as 2, 3, or 4. During encoding of a certain current picture, reference pictures contained in each of RPL0 and RPL1 are determined based on a certain type of configuration or algorithm, which is not the focus of this disclosure. However, the same reference picture may appear in both RPL0 and RPL1. That is, the codec allows the current block to refer to two reference blocks of the same reference picture.

The codec generally uses an index in the reference picture list to correspond to a reference picture. If the reference picture list has a length of 4, there are four indexes: 0, 1, 2, and 3. For example, if RPL0 for the current picture contains four reference pictures with POC 5, POC 4, POC 3, and POC 0, then index 0 in RPL0 corresponds to a reference picture with POC 5, index 1 in RPL0 corresponds to a reference picture with POC 4, index 2 in RPL0 corresponds to a reference picture with POC 3, and index 3 in RPL0 corresponds to a reference picture with POC 0.

The "motion" is indicated by motion information in inter prediction. Basic motion information includes reference picture information and MV information. For a block, in order to use the bi-directional prediction, two reference blocks need to be found, and thus two groups of reference picture information and MV information are needed. Each of the two groups may be understood as one unidirectional motion information, and the two groups may be combined together to form one bi-directional motion information. In a specific implementation, the same data structure may be used for the unidirectional motion information and the bi-directional motion information, but the two groups of reference picture information and MV information in the bi-directional motion information are both valid, while one of the two groups of reference picture information and MV information in the unidirectional motion information is invalid. The "valid" may be understood as "used", and the "invalid" may be understood as "not used".

In versatile video coding (VVC), two reference picture lists are supported and represented by RPL0 and RPL1 respectively. For the above bi-directional motion information, a reference picture index refIdxL0 corresponding to RPL0, an MV mvL0 corresponding to RPL0, a reference picture index refIdxL1 corresponding to RPL1, and an MV mvL0 corresponding to RPL1 are used in VVC. Herein, the reference picture index corresponding to RPL0 and the reference picture index corresponding to RPL1 may be understood as the above reference picture information. In VVC, two flags are used to indicate whether to use motion information corresponding to RPL0 and whether to use motion information corresponding to RPL1 respectively, and are represented by predFlagL0 and predFlagL1 respectively. It may also be understood that, predFlagL0 and predFlagL1 indicate whether the above unidirectional motion information is "valid". Therefore, in VVC, although such a data structure of the motion information is not explicitly mentioned, the motion information is indicated by using a reference picture index, an MV, and a flag indicating whether to be "valid" corresponding to each reference picture list. In standard texts of VVC, the term "MV" is used rather than "motion information", and a reference picture index and a flag indicating whether to use corresponding motion information may also be treated as attributes to the MV. In embodiments of the disclosure, the "motion information" is still used for the convenience of illustration, but it may be understood that the "MV" may also be used for illustration. The "motion information" may also be referred to as "motion parameter".

For a two-dimensional picture, the MV may be represented by (x, y), i.e., a component in a horizontal direction and a component in a vertical direction. Since a video is represented by pixels (also referred to as samples), and there is a distance between pixels, the motion of an object may not always correspond to an integer-pixel distance between neighbouring pictures. For example, for a long-shot video, a distance between two pixels is 1 meter on a long-shot object, and a distance that this object has moved within time between two pictures is 0.5 meters, so that this kind of scene cannot be well represented by an integer-pixel MV. Therefore, the MV may arrive at a fractional-pixel level, such as 1/2 pixel precision, 1/4 pixel precision, 1/8 pixel precision, and 1/16 pixel precision, so that the motion is expressed more finely. Pixel values at fractional-pixel positions in a reference picture are obtained in an interpolation method.

Both the unidirectional prediction and the bi-directional prediction in the above translational prediction are based on a block, such as a CU or a PU. That is, a pixel matrix is used as a unit for prediction. The most basic block is a rectangular block, such as a square and a rectangle. Video coding standards, such as high efficiency video coding (HEVC) and VVC, allow an encoder to determine the size and partition mode of the CU or the PU according to the content of a video. It is expected to use larger blocks for regions with simple texture or motion, and it is expected to use smaller blocks for regions with complex texture or motion. The deeper the block partitioning level is, the more complex blocks which are closer to actual texture or motion can be partitioned, but accordingly, the overhead for representing these partitions is also greater. The motion information may also need to be transmitted in a bitstream. Generally, the finer the block partitioning, the greater the overhead of the motion information.

The most primitive method for representing the motion information is to directly signal complete motion information. Later, experts have found that motion vector prediction (MVP) and motion vector difference (MVD) can be used for representing the MV, i.e., MV = MVP + MVD. The more accurate the MVP, the smaller the MVD, and thus the lower the overhead occupied in the bitstream.

It may be understood that, each inter-coding block requires one motion information. To simplify the problem, it is assumed that the partition for the CU is equal to the partition for the PU and is equal to the partition for the TU. In other words, one CU has one PU with the same size and position and one TU with the same size and position. In practice, with more flexible CU partitioning, compared with HEVC, in VVC, there is a tendency to de-emphasize the PU and the TU. The difference in any one of the operations: prediction, transform, quantization, and entropy coding, may result in the partition for the CU. For example, if two regions have different motion information, the encoder may partition the two regions into different CUs. For another example, if two regions share similar or identical motion information but have significantly different residual characteristics, the encoder may also partition the two regions into different CUs. The partition is determined according to the overall compression efficiency and is not solely dependent on a certain factor. Therefore, the same object or regions with similar or identical motion may be partitioned into different CUs.

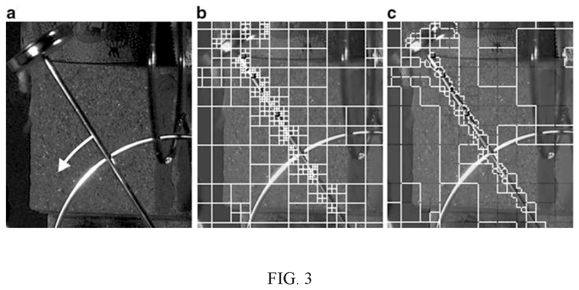

FIG. 3 is an example of HEVC. 'a' is an original picture, where an iron pole moves in a direction indicated by an arrow, with relatively small motion in a background region. The picture b illustrates block partitioning in HEVC. In the picture c, boundaries between blocks with identical motion information in the picture b are removed. As can be seen, the same motion information is used for many neighbouring blocks. In such a case, encoding motion information for each block separately may lead to significant waste. As above mentioned, the complete motion information in VVC includes the reference picture index, MV, and usage flag corresponding to RPL0 as well as the reference picture index, MV, and usage flag corresponding to RPL1. A basic principle of a merge mode is that motion information including reference picture information and MV information of a neighbouring block can be inherited by the current block.

In the merge mode, a merge candidate list may be constructed. If the merge mode is used for the current block, an index may be used to indicate which motion information to be merged for the current block, so that complete motion information does not need to be encoded. During construction of the merge candidate list, motion information of a spatial neighbouring block, temporal motion information, motion information of a spatial non-neighbouring block, motion information of a temporal non-neighbouring block, history-based motion information, synthesized motion information, and the like of the current block may be added.

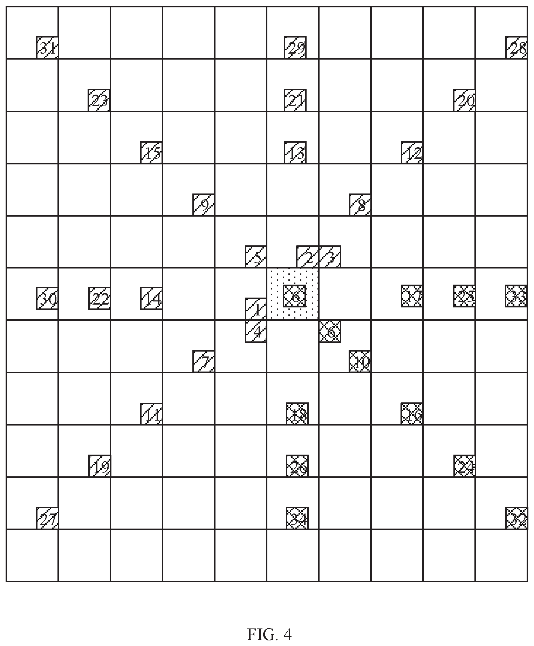

The spatial neighbouring block refers to a block neighbouring to the current block in the same picture, and the spatial non-neighbouring block refers to a block non-neighbouring to the current block in the same picture. The temporal motion information and the motion information of the temporal non-neighbouring block refer to motion information at specified positions in a collocated reference picture. An example is illustrated in FIG. 4, where a gray block represents a current block, positions 1, 2, 3, 4, and 5 represent positions of spatial neighbouring blocks used in a merge mode, and other positions ▨ represent positions of spatial non-neighbouring blocks used in the merge mode. Positions 6 represent positions used for temporal motion information. If a corresponding position at the bottom-right corner of the current block is unavailable, a corresponding position at the center of the current block may be used. Other positions ⊠ represent positions used for motion information of temporal non-neighbouring blocks. The temporal motion information is derived according to motion information at corresponding positions in a collocated reference picture. A specific derivation method will be introduced below.

The history-based motion information is not correlated with a position. The codec maintains a first-in-first-out motion information list. When coding each block, the codec updates this list with motion information of that block while ensuring no duplication with existing motion information in this list. The history-based motion information is then obtained from this list.

Temporal motion information (or MV) prediction is used as a supplementary to spatial motion information prediction. Generally, the correlation between neighbouring regions in the same picture is stronger than the correlation across different pictures. However, in some cases, the temporal motion information is more effective. A simple example is as follows. For example, if a current block and a neighbouring block around the current block in a current picture belong to different objects and have distinct motion, then the motion of a block that belongs to the same object as the current block in a certain reference picture can provide better motion information prediction for the current block.

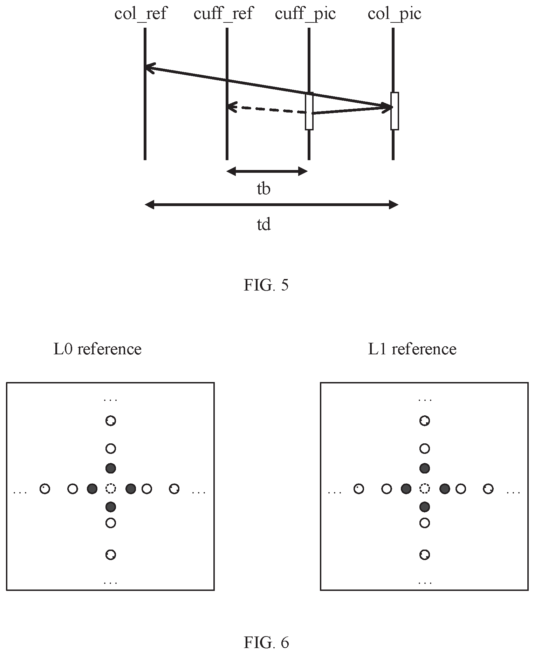

As illustrated in FIG. 5, an MV of a collocated block (where a block from which temporal motion information is obtained is referred to as the collocated block herein) in a collocated reference picture is a vector from the collocated reference picture col_pic to a reference picture of the collocated block col_ref. For a current block, an MV(s) from a current picture curr_pic to a reference picture of the current block curr_ref is required. A POC distance between col_pic and col_ref is set to td, and a POC distance between curr_pic and curr_ref is set to tb. Assuming that the motion from the collocated block to the current block remains unchanged, a scaling factor can be determined according to td and tb. If the MV of the collocated block is set to (col_mv_x, col_mv_y), temporal MV prediction (tmvp_x, tmvp_y) may be derived as follows: tmvp_x = col_mv_x * tb / td, and tmvp_y = col_mv_y * tb / td.

In VVC, a minimum unit for storing motion information in the collocated reference picture is of 4x4. That is, one group of motion information is stored in each 4x4 subblock. It may be understood that, regardless of the cost of hardware implementation, for the collocated reference picture, one group of motion information can be stored in each sample.

In the merge mode, motion information directly selected from the merge candidate list serves as motion information of the current block. In actual video, an actual MV of the current block may slightly differ from an MV selected from the merge candidate list. A merge mode with MVD (MMVD) is a special merge mode in VVC, in which an efficient method is used for encoding MVD in such a case. In regular merge, the MVD does not need to be coded. In a regular inter mode, the MVD needs to be directly coded. The characteristic that the MVDs are more distributed in a single horizontal direction or a single vertical direction and the characteristic that there are more MVDs with small values and fewer MVDs with large values are utilized in the MMVD, as illustrated in FIG. 6.

The MMVD can only represent MVDs with specific values in some specific directions, but cannot represent any MVD. mmvd_direction_idx is used for representing a direction of the MVD. Certainly, it may also be understood as whether x and y of the MVD are non-zero and the sign (e.g., positive or negative) thereof. mmvd_distance_idx is used for representing an absolute value MmvdDistance of x or y of the MVD that is non-zero. The relationship between mmvd_distance_idx[x0][y0] and MmvdDistance[x0][y0] is illustrated in the following table.

| mmvd_distance_ idx[x0][y0] | MmvdDistance[x0][y0] | |
|---|---|---|
| | ph_mmvd_fullpel_only_flag == 0 | ph_mmvd_fullpel_only_ flag == 1 |
| 0 | 1 | 4 |
| 1 | 2 | 8 |
| 2 | 4 | 16 |
| 3 | 8 | 32 |
| 4 | 16 | 64 |
| 5 | 32 | 128 |
| 6 | 64 | 256 |
| 7 | 128 | 512 |

In the above, ph_mmvd_fullpel_only_flag is a picture header flag, and two different combinations of the MMVD may be set.

The relationship between mmvd_distance_idx[x0][y0] and MmvdSign[x0][y0] is illustrated in the following table.

| mmvd_direction_idx[x0][y0] | MmvdSign[x0][y0][0] | MmvdSign[x0][y0][1] |
|---|---|---|
| 0 | +1 | 0 |
| 1 | -1 | 0 |
| 2 | 0 | +1 |
| 3 | 0 | -1 |

The MVD of the MMVD is obtained in the following method:

$$MmvdOffset[x0][y0][0] = (MmvdDistance[x0][y0]<<2) * MmvdSign[x0][y0][0]$$

$$MmvdOffset[x0][y0][1] = (MmvdDistance[x0][y0]<<2) * MmvdSign[x0][y0][1]$$

In consumer video, the bitrate is generally restricted. Therefore, video compression generally seeks a trade-off between bitstream overhead and distortion. Taking block partitioning as an example, for the same content, within a certain range, the finer the partitioning, the higher the overhead and the smaller the distortion, while the coarser the partitioning, the lower the overhead and the greater the distortion. Taking coding of motion information as an example, for the same content, within a certain range, the more accurate the motion information, the higher the overhead and the smaller the distortion, while the coarser the motion information, the lower the overhead and the greater the distortion. Some methods for a decoder side use information at the decoder side for processing and calculation without occupying the overhead, thereby refining the motion information, improving the prediction effect, and reducing the distortion. Not occupying the overhead means that there is no indication from an encoder according to an original picture, and the processing is automatically performed according to available information. Two typical methods for the decoder side in VVC are decoder side motion vector refinement (DMVR) and bi-directional optical flow (BDOF).

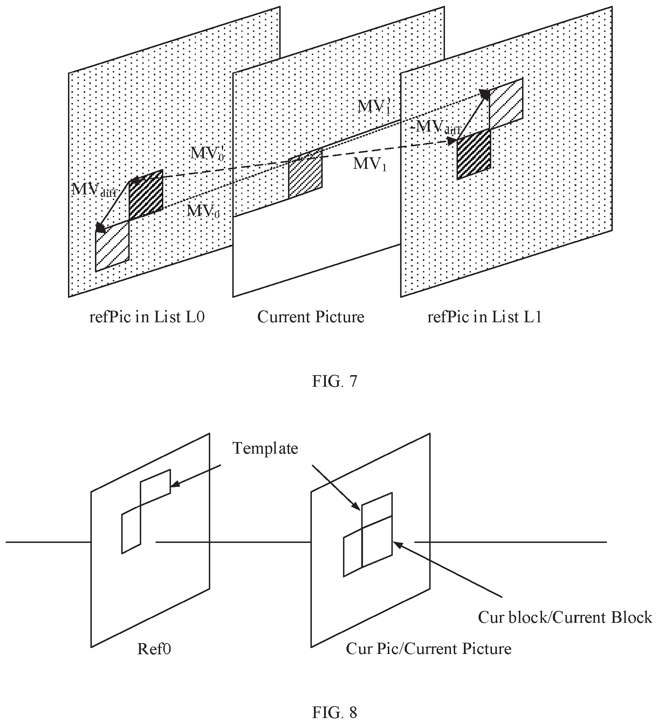

A condition for enabling DMVR in VVC is that two reference pictures of a current block are respectively earlier than and later than the current picture, and the two reference pictures have the same distance from the current picture. Another enabling condition is that a whole-block merge mode (including skip) is used for a current CU. The "whole-block" merge mode does not include subblock-based merge such as SbTMVP and affine merge, because motion vectors are prone to inaccuracy in the merge mode. There are some other conditions, which will not be elaborated herein. DMVR in VVC utilizes bilateral matching (BM), i.e., calculating matching costs for reference blocks on two sides, for example, calculating a sum of absolute differences (SAD) or a sum of absolute transformed differences (SATD) between two reference blocks. Through DMVR search, matching costs for MVs around an original MV are obtained. During movement, MVs of the two reference pictures move in a mirrored manner, i.e., based on their respective original MVs, one moves by $MV_{diff}$, and the other moves by $-MV_{diff}$, as illustrated in FIG. 7. An MV with an original MV corresponding to RPL0 is set to $MV_0$, an MV with an original MV corresponding to RPL1 is set to $MV_1$, and MVs after search or refinement are set to $MV_0'$ and $MV_1'$ respectively. In the following, this search method is referred to as a mirrored search method.

$$MV_0' = MV_0 + MV_{diff}$$

$$MV_1' = MV_1 - MV_{diff}$$

For the search, search in fractional-pixels is also supported, and thus it is possible to find an MV with higher precision than the original MV through DMVR. The search follows a certain rule. Generally, integer-pixel MVs within a certain range are first searched to find an integer-pixel MV with a minimum matching cost, and then fractional-pixel MVs are searched based on the integer-pixel MV. If an MV with a smaller matching cost than the original MV is found, the MV with the smaller matching cost may be used for motion compensation prediction. Alternatively, integer-pixel MVDs may be first searched to find an integer-pixel MVD with a minimum matching cost, and then fractional-pixel MVDs are searched based on the integer-pixel MVD. If an MV with a smaller matching cost than the original MV is found, the MV with the smaller matching cost may be used for motion compensation prediction. If the original MV is a fractional-pixel MV, a new MV obtained during search for the integer-pixel MVDs is also a fractional-pixel MV.

Theoretically, an MV refined through DMVR can be used for storing MVs and neighbouring blocks. For example, in terms of constructing a merge candidate list for a current block, if an MV is refined for a neighbouring block using DMVR, the use of a refined MV for constructing the merge candidate list can achieve better compression. However, in consideration of hardware implementation, this is not done in VVC.

DMVR may be on a subblock basis. Actually, in VVC, if a block has greater than 16 samples in a horizontal direction or vertical direction, subblock partitioning may be based on the size of 16 samples. For one thing, this is based on the consideration for hardware implementation complexity, because DMVR search needs to be performed at the decoder side, and the restriction for the size of a subblock can reduce the cost of buffering. For another, partitioning into subblocks can provide greater flexibility, enabling independent refinement of MVs for each subblock. To a certain degree, the precision of partitioning can be improved, and the compression efficiency can also be enhanced.

BDOF is also a typical method for the decoder side. As its name suggests, BDOF refines MVs and predictions based on a principle of optical flow. The optical flow is an instantaneous velocity of pixel motion of a moving object on an observation imaging plane in space. There are some basic assumptions for the optical flow, for example, brightness constancy, i.e., when the same target moves between different pictures, its brightness stays constant. Time is continuous, or the motion is slight motion. That is, a change in time will not cause drastic changes in a position of the target.

A condition for enabling BDOF in VVC is that two reference pictures of the current block are respectively earlier than and later than the current picture, and the two reference pictures have the same distance from the current picture. In VVC, for each 4x4 subblock, a motion vector offset $(v_x, v_y)$ is derived by BDOF. This offset is calculated by minimizing a difference between prediction values in two directions. This motion vector offset is also used for adjusting a prediction value within a corresponding subblock. The derivation process is as follows.

First, gradients $\dfrac{\partial I^{(k)}}{\partial x}(i, j)$ of two prediction blocks in a horizontal direction and gradients $\dfrac{\partial I^{(k)}}{\partial y}(i, j)$ of the two prediction blocks in a vertical direction are calculated, where $k = 0,1$.

$$\frac{\partial I^{(k)}}{\partial x}(i, j) = \left( \ (I^{(k)}(i+1, j) \gg shift1) \ - \ (I^{(k)}(i-1, j) \gg shift1) \ \right)$$

$$\frac{\partial I^{(k)}}{\partial y}(i, j) = \left( \ (I^{(k)}(i, j+1) \gg shift1) \ - \ (I^{(k)}(i, j-1) \gg shift1) \ \right)$$

$I^{(k)}(i, j)$ is a prediction value corresponding to coordinates $(i, j)$ of a reference picture list $k$, where $k = 0,1$. $shift1$ is calculated according to a bit depth bitDepth of luma: $shift1 = \max(6, bitDepth-6)$.

$S_1$, $S_2$, $S_3$, $S_5$, and $S_6$ are calculated as follows:

$$S_1 = \sum_{(i,j) \in \Omega} Abs\ (\psi_x(i,j))\ , \quad S_3 = \sum_{(i,j) \in \Omega} \theta(i,j) \cdot Sign\ (\psi_x(i,j))$$

$$S_2 = \sum_{(i,j) \in \Omega} \psi_x(i,j) \cdot Sign\ (\psi_y(i,j))$$

$$S_5 = \sum_{(i,j) \in \Omega} Abs\ (\psi_y(i,j))\ , \quad S_6 = \sum_{(i,j) \in \Omega} \theta(i,j) \cdot Sign\ (\psi_y(i,j))$$

In the above:

$$\psi_x(i,j) = \left( \frac{\partial I^{(1)}}{\partial x}(i, j) + \frac{\partial I^{(0)}}{\partial x}(i, j) \right) \gg n_a$$

$$\psi_y(i,j) = \left( \frac{\partial I^{(1)}}{\partial y}(i, j) + \frac{\partial I^{(0)}}{\partial y}(i, j) \right) \gg n_a$$

$$\theta(i,j) = (I^{(1)}(i, j) \gg n_b) - (I^{(0)}(i, j) \gg n_b)$$

$\Omega$ is a 6x6 window around a current subblock of 4x4, $n_a$ is min(1,bitDepth-11), and $n_b$ is min(4,bitDepth-8).

The motion vector offset $(v_x, v_y)$ is calculated as follows:

$$v_x = S_1 > 0?\ clip3 \left( -th'_{BIO}, th'_{BIO}, - \left( (S_3 \cdot 2^{n_b - n_a}) \gg \lfloor \log_2 S_1 \rfloor \right) \right) : 0$$

$$v_y = S_5 > 0 ? clip3\left(-th'_{BIO}, th'_{BIO}, -\left(\left(S_6 \cdot 2^{n_b - n_a} - \left(\left(v_x S_{2,m}\right) \ll n_{S_2} + v_x S_{2,s}\right)/2\right) \gg \lfloor \log_2 S_5 \rfloor\right)\right) : 0$$

In the above, $S_{2,m} = S_2 \gg n_{S_2}$, $S_{2,s} = S_2 \& (2^{n_{S_2}} - 1)$, $th'_{BIO} = 2^{\max(5, BD-7)}$. $\lfloor \cdot \rfloor$ represents rounding down, and $n_{S_2} = 12$.

According to the motion vector offset and the gradients, each prediction value within the 4x4 subblock is adjusted as follows.

$$b(x, y) = rnd\left(\left(v_x\left(\frac{\partial I^{(1)}(x,y)}{\partial x} - \frac{\partial I^{(0)}(x,y)}{\partial x}\right) + v_y\left(\frac{\partial I^{(1)}(x,y)}{\partial y} - \frac{\partial I^{(0)}(x,y)}{\partial y}\right) + 1\right)/2\right)$$

A final prediction value corresponding to BDOF is calculated as follows.

$$pred_{BDOF}(x,y) = \left(I^{(0)}(x,y) + I^{(1)}(x,y) + b(x,y) + o_{offset}\right) \gg shift$$

$O_{offset}$ and *shift* are calculated according to the bit depth of luma. $n_a$, $n_b$, and *shift* are all introduced to reduce the bit width during the calculation.

For BDOF, the motion vector offset can achieve high precision, thereby making prediction more accurate, and subblock-based processing also enhances flexibility, both aspects of which are similar to those of DMVR.

Both multi-pass DMVR (MDMVR) and BDOF contribute to motion vector refinement. DMVR is based on block matching, and BDOF is based on the principle of optical flow. The DMVR and BDOF can be used in combination. An example is as follows, and may be referred to as MDMVR.

First step, whole-block-based BM motion vector refinement.

Second step, subblock-based BM motion vector refinement. The size of a subblock in this step may be 16x16.

Third step, subblock-based BDOF motion vector refinement. The size of a subblock in this step may be 8x8.

Certainly, further steps may be introduced based on this. For example, the fourth step, 4x4 subblock-based BDOF motion vector refinement, may be introduced, or point-based BDOF motion vector refinement may be introduced, and so on.

For each subsequent step, a refined MV from a previous step is used as an initial MV for refinement.

A template matching (TM) method is originally used in inter prediction. As illustrated in FIG. 8, this method uses the correlation between neighbouring samples and takes some regions neighbouring to a current block as templates. In terms of coding the current block, blocks on the left and the top of the current block have already been coded according to a coding order. Certainly, in the implementation of a hardware decoder, it may not be ensured that the blocks on the left and the top of the current block have already been decoded when starting to decode the current block. Certainly, an inter block is discussed herein. For example, in HEVC, in terms of generating a prediction block for an inter-coding block, neighbouring reconstructed samples are not required, and therefore, the prediction process for the inter block may be performed in parallel. However, for an intra-coding block, reconstructed samples on the left and on the top are required as reference samples. Theoretically, the samples on the left and on the top are available, that is, this can be achieved by making corresponding adjustments on the hardware design. Relatively speaking, samples on the right and on the bottom are unavailable according to a coding order in VVC.

As illustrated in FIG. 8, rectangular regions on the left and the top of the current block are set as templates. The height of the left template part is generally the same as the height of the current block, and the width of the top template part is generally the same as the width of the current block, though they may also be different. A best matching position of the template is searched for in a reference picture, so as to determine motion information or an MV of the current block. This process may be generally described as follows. In a certain reference picture, search within a certain neighbouring range starting from a start position. A search rule may be preset, such as a search range and a search step length. Upon moving to a position each time, a matching degree between a template corresponding to the position and a template neighbouring to the current block is calculated. The matching degree may be measured according to some distortion costs, such as SAD, SATD (where a transform used in the SATD is generally a Hadamard transform), and a mean-square error (MSE), etc. A smaller value of the SAD, the SATD, or the MSE indicates a higher matching degree. A cost is calculated based on a prediction block of the template corresponding to the position and a reconstructed block of the template neighbouring to the current block. In addition to search for a position of an integer sample, search for a position of a fractional sample may also be performed. The motion information of the current block is determined according to a position with the highest matching degree found through search. Due to the correlation between the neighbouring samples, motion information suitable for the template may also be motion information suitable for the current block. Certainly, the TM method may not be applicable to all blocks, and therefore, some methods may be used to determine whether the above TM method is used for the current block, for example, a control switch is used for the current block to indicate whether to use the TM method. Such a TM method is also called decoder side motion vector derivation (DMVD). Both an encoder and a decoder may perform search based on a template to derive motion information or find better motion information based on original motion information. In order to ensure consistency between encoding and decoding, the encoder and the decoder perform search based on the same rule instead of transmitting a specific MV or MVD. The TM method can enhance the compression performance, but requires the "search" to be performed at the decoding end as well, which introduces certain complexity at the decoding end.

TM can be used for refining an MV of a bi-directional predicted block, i.e., refining bi-directional motion information. In terms of refining the bi-directional motion information, TM in ECM uses the following process.

First step, TM is used for refining $MV_0$ corresponding to RPL0, and during calculation of a matching cost, a template of a reference block located by $MV_0$ is compared with a template of a current block. A minimum cost $minCost_0$ in this process is recorded.

Second step, TM is used for refining $MV_1$ corresponding to RPL1, and during calculation of a matching cost, a template of a reference block located by $MV_1$ is compared with the template of the current block. A minimum cost $minCost_1$ in this process is recorded.

Third step, $minCost_0$ is compared with $minCost_1$. A reference direction corresponding to a greater cost is denoted as $X$, where $X$ is 0 or 1, and a reference direction corresponding to a smaller cost is denoted as $1-X$. TM is used again for refining $MV_x$ corresponding to RPLX. In this refinement, during calculation of a matching cost, a template of a reference block located by $MV_x$ is compared with a modified template of the current block. A possible method is that a value at each position of the modified template of the current block is equal to twice a value at a corresponding position of the template of the current block minus a value at a corresponding position of a template of a reference block located by the latest $MV_{1-x}$.

That is to say, TM is first used for refining MVs in two reference directions separately, which corresponds to the above first step and second step. Then, an MV in a direction with relatively poor matching is refined again using the modified template. The first step and second step are independent of each other and are performed in no particular order. After $MV_x$ corresponding to RPLX is refined in the third step, one method is to further introduce the fourth step to refine $MV_{1-x}$ corresponding to RPL(1-X). The refinement in the fourth step is similar to that in the third step, except that $X$ is replaced with $1-X$.

Each step of search may follow a specified search range and search order. For example, search within the entire search range from inside to outside with a start MV as the center. Alternatively, search within a 3x3 MV region with a start MV as the center, then search within a 3x3 MV region again with an MV with a minimum cost as the center, and repeat this process several times. The third step may be further repeated after the fourth step, and so on.

The above search method is referred to as a unidirectional plus iterative search method for short in the following. Since each step of search focuses on only one reference direction, the search method is referred to as a unidirectional search method. After optimization in two unidirectional directions, at least one of the two unidirectional directions needs to be optimized again, and thus the search method is referred to as an iterative search method.

For both BM and TM, an MV is refined based on block matching. That is, BM and TM rely on a matching degree of a sample value to determine the quality of the MV, but tend to select an MV closer to an original MV when the matching degree is identical or very similar. Therefore, the "matching cost" may be replaced with a "comprehensive matching cost", i.e., a cost including both SAD or SATD for sample matching and a cost for a motion vector (difference). For example, the comprehensive matching cost is set to *cost,* where *cost = SAD + costMV*. All matching costs/costs used in the search process described above can be replaced with the "comprehensive matching costs". Herein, *costMV* may be calculated using a linear function, piecewise function, or nonlinear function for the motion vector difference.

However, for DMVR, during search for MVs using BM, MVs in two prediction directions move simultaneously, and MVs of two reference pictures move in a mirrored manner, i.e., based on their respective original MVs, one moves by $MV_{diff}$, and the other moves by $-MV_{diff}$. This operation is based on an assumption that the content of the current block undergoes uniform linear motion in a period of time between the two reference pictures. Certainly, this assumption holds in many cases. However, motion in the natural world is complex, and if an interval between the two reference pictures is relatively long, the interval cannot be simply regarded as an instant. Data shows that a certain proportion of motion is not uniform linear motion between the two reference pictures. Both velocity and direction may change. For DMVR, when the MV is not precise enough, small MVDs can be compensated based on BM. If an object undergoes uniform linear motion between the two reference pictures, a refined matching block may be theoretically at a desired position for the current block. However, if the object does not undergo uniform linear motion between the two reference pictures, the refined matching block theoretically deviates from an ideal position for the current block. A shortcoming of DMVR is the inability to accurately "locate" a reference block.

TM can be said to have a certain "locating" function. In TM, the MV is refined according to a matching degree of a template. The template is not the current block itself. Actually, in TM, information around the current block is used for "locating" the current block. However, a shortcoming of TM is that due to a lack of information inside the current block, it can only be determined that the best position for TM may be the best position for the reference block.

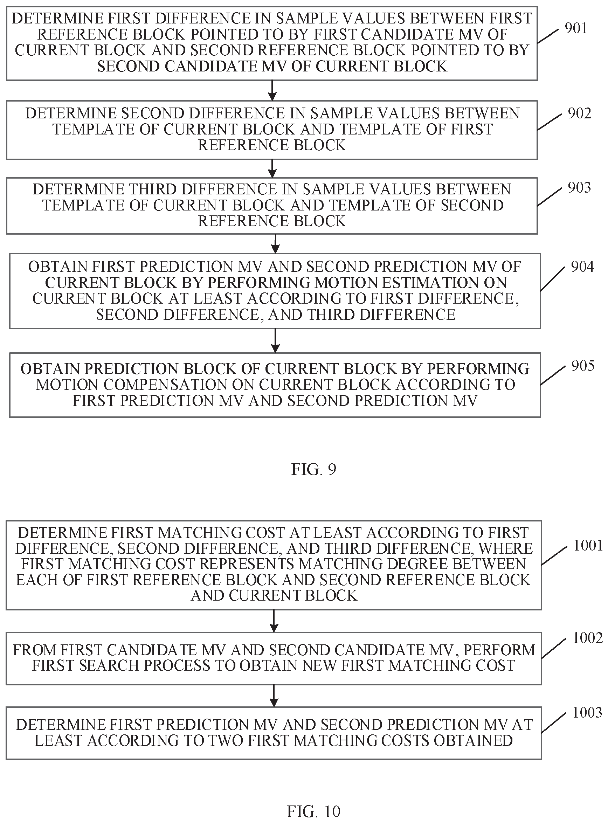

Based on the above analysis, an encoding method is provided in embodiments of the disclosure. The method is applied to an encoder. FIG. 9 is a schematic flowchart illustrating implementation of an encoding method provided in embodiments of the disclosure. As illustrated in FIG. 9, the method includes operations at 901 to operations at 905 below.

At 901, a first difference in sample values between a first reference block pointed to by a first candidate MV of a current block and a second reference block pointed to by a second candidate MV of the current block is determined.

At 902, a second difference in sample values between a template of the current block and a template of the first reference block is determined.

At 903, a third difference in sample values between the template of the current block and a template of the second reference block is determined.

At 904, a first prediction MV and a second prediction MV of the current block are obtained by performing motion estimation on the current block at least according to the first difference, the second difference, and the third difference.

At 905, a prediction block of the current block is obtained by performing motion compensation on the current block according to the first prediction MV and the second prediction MV.

Exemplarily, in some embodiments, a reference block corresponding to the current block is found from a pointed reference picture based on the first prediction MV, and a reference block corresponding to the current block is found from a pointed reference picture based on the second prediction MV. Weighted average is performed on a reconstructed value of a reference block pointed to by the first prediction MV and a reconstructed value of a reference block pointed to by the second prediction MV, to obtain the prediction block of the current block, i.e., obtain a prediction value of the current block. Compared with unidirectional inter prediction, such a bi-directional inter prediction method further enhances the video compression performance, i.e., improves the accuracy of inter prediction for the current block, thereby contributing to reducing codeword overhead.

It may be noted that, the encoder and a decoder use the same operations to obtain the prediction block of the current block, and thus both the encoder and the decoder need to perform operations illustrated in FIG. 9.

It may be understood that in embodiments of the disclosure, during motion estimation on the current block, not only the second difference in the sample values between the template of the current block and the template of the first reference block pointed to by the first candidate MV of the current block as well as the third difference in the sample values between the template of the current block and the template of the second reference block pointed to by the second candidate MV of the current block are used, but also the first difference in the sample values between the first reference block pointed to by the first candidate MV and the second reference block pointed to by the second candidate MV is taken into consideration. As such, it is conducive to improving the accuracy of motion estimation on the current block, i.e., the accuracy of the first prediction MV and the second prediction MV of the current block, thereby improving the accuracy of inter prediction for the current block and enhancing the video coding performance.

In some embodiments, the encoding method further includes the following. A residual block of the current block is determined according to an original block of the current block and the prediction block of the current block. A bitstream is generated according to the residual block of the current block.

The following will describe further optional implementations of the above operations and related terms.

In the operations at 901, the first difference in the sample values between the first reference block pointed to by the first candidate MV of the current block and the second reference block pointed to by the second candidate MV of the current block is determined.

In some embodiments, a codec may determine a first difference between a reconstructed value of the first reference block and a reconstructed value of the second reference block.

Exemplarily, in some embodiments, the first difference may be an SAD, a sum of squares due to error (SSE), an SATD, or an MSE, etc., determined based on the reconstructed value of the first reference block and the reconstructed value of the second reference block.

In operations at 902, the second difference in the sample values between the template of the current block and the template of the first reference block is determined.

In some embodiments, the codec may determine a second difference between a reconstructed value of the template of the current block and a reconstructed value of the template of the first reference block.

Exemplarily, in some embodiments, the second difference may be an SAD, an SSE, an SATD, or an MSE, etc., determined based on the reconstructed value of the template of the current block and the reconstructed value of the template of the first reference block.

It may be understood that, in terms of determining the second difference, a position of the template of the current block relative to the current block is consistent with a position of the template of the first reference block relative to the first reference block. For example, when the template of the current block includes a left neighbouring region of the current block, the template of the first reference block also includes a left neighbouring region of the first reference block. For another example, when the template of the current block includes a top neighbouring region of the current block, the template of the first reference block also includes a top neighbouring region of the first reference block. For another example, when the template of the current block includes the top neighbouring region and the left neighbouring region of the current block, the template of the first reference block also includes the top neighbouring region and the left neighbouring region of the first reference block.

In operations at 903, the third difference in the sample values between the template of the current block and the template of the second reference block is determined.

In some embodiments, the codec may determine a third difference between the reconstructed value of the template of the current block and a reconstructed value of the template of the second reference block.

Exemplarily, in some embodiments, the third difference may be an SAD, an SSE, an SATD, or an MSE, etc., determined based on the reconstructed value of the template of the current block and the reconstructed value of the template of the second reference block.

Similarly, in terms of determining the third difference, the position of the template of the current block relative to the current block is consistent with a position of the template of the second reference block relative to the second reference block. For example, when the template of the current block includes a left neighbouring region of the current block, the template of the first reference block also includes a left neighbouring region of the first reference block. For another example, when the template of the current block includes a top neighbouring region of the current block, the template of the first reference block also includes a top neighbouring region of the first reference block. For another example, when the template of the current block includes the top neighbouring region and the left neighbouring region of the current block, the template of the first reference block also includes the top neighbouring region and the left neighbouring region of the first reference block.

In embodiments of the disclosure, for both the template of the current block and a template of a reference block, there is no limitation on which positions neighbouring to a block are included in a template of the block, and any reconstructed sample neighbouring to the block may be included.

Exemplarily, in some embodiments, the template of the block may include at least one of: a top neighbouring sample of the block, a top-left neighbouring sample of the block, a top-right neighbouring sample of the block, a left neighbouring sample of the block, the top-left neighbouring sample of the block, or a bottom-left neighbouring sample of the block.

In operations at 904, the first prediction MV and the second prediction MV of the current block are obtained by performing motion estimation on the current block at least according to the first difference, the second difference, and the third difference.

The codec may implement the operations at 904 in combination with any one of the following embodiments 1 to 3. Descriptions of these embodiments are as follows.

Embodiment 1

In some embodiments, as illustrated in FIG. 10, the encoder or decoder may implement the operations at 904 through operations at 1001 to operations at 1003 below.

At 1001, a first matching cost is determined at least according to the first difference, the second difference, and the third difference, where the first matching cost represents a matching degree between each of the first reference block and the second reference block and the current block.

In a possible implementation, the encoder or decoder may implement the operations at 1001 as follows. The first matching cost is determined according to the first difference, the second difference, and the third difference.

For example, in some embodiments, the encoder or decoder may determine the first matching cost *cost* according to the following formula.

$$cost = costBM + costTM_0 + costTM_1$$

In the above, *costBM* represents the first difference, *costTM$_0$* represents the second difference, and *costTM$_1$* represents the third difference.

For another example, in some other embodiments, the encoder or decoder may also determine the first matching cost as follows. A first weighting factor for the first difference, a second weighting factor for the second difference, and a third weighting factor for the third difference are determined. The first matching cost is obtained by weighting the first difference, the second difference, and the third difference according to the first weighting factor, the second weighting factor, and the third weighting factor.

Exemplarily, the encoder or decoder may determine the first matching cost *cost* according to the following formula.

$$cost = factorBM * costBM + factorTM_0 * costTM_0 + factorTM_1 * costTM_1$$

In the above, *factorBM* represents the first weighting factor, *factorTM_0* represents the second weighting factor, and *factorTM_1* represents the third weighting factor.

The first weighting factor, the second weighting factor, and the third weighting factor may be preset values or values related to a size of the current block or a size of the template of the current block. That is, the encoder or decoder may determine the first weighting factor to the third weighting factor according to the size of the current block or the size of the template of the current block.

For example, the first weighting factor is equal to the number of samples in the template of the current block, the second weighting factor is equal to the number of samples of the current block, and the third weighting factor is equal to the number of samples of the current block.

In another possible implementation, the encoder or decoder determines the first matching cost not only according to the first difference, the second difference, and the third difference, but also according to a first MVD of the first candidate MV and a second MVD of the second candidate MV. That is, the encoder or decoder may also implement the operations at 1001 as follows. The first MVD of the first candidate MV and the second MVD of the second candidate MV are determined. The first matching cost is determined according to the first difference, the second difference, the third difference, the first MVD, and the second MVD.

For example, in some embodiments, the encoder or decoder may determine the first matching cost *cost* according to the following formula.

$$cost = costBM + costTM_0 + costTM_1 + costMV_0 + costMV_1$$

In the above, *costBM represents* the first difference, *costTM_0* represents the second difference, *costTM_1* represents the third difference, *costMV_0* represents the first MVD of the first candidate MV, and *costMV_1* represents the second MVD of the second candidate MV.

For another example, in some other embodiments, the encoder or decoder may also determine the first matching cost as follows. A first weighting factor for the first difference, a second weighting factor for the second difference, a third weighting factor for the third difference, a fourth weighting factor for the first MVD, and a fifth weighting factor for the second MVD are determined. The first matching cost is obtained by weighting the first difference, the second difference, the third difference, the first MVD, and the second MVD according to the first weighting factor, the second weighting factor, the third weighting factor, the fourth weighting factor, and the fifth weighting factor.

Exemplarily, the encoder or decoder may determine the first matching cost *cost* according to the following formula.

$$cost = factorBM * costBM + factorTM_0 * costTM_0 + factorTM_1 * costTM_1$$
$$+ factorMV_0 * costMV_0 + factorMV_1 * costMV_1$$

In the above, *factorBM* represents the first weighting factor, *factorTM_0* represents the second weighting factor, *factorTM_1* represents the third weighting factor, *factorMV_0* represents the fourth weighting factor, and *factorMV_1* represents the fifth weighting factor.

At 1002, from the first candidate MV and the second candidate MV, a first search process is performed to obtain a new first matching cost.

The encoder or decoder may search, according to a predefined MV search rule, on a first reference picture pointed to by the first candidate MV and a second reference picture pointed to by the second candidate MV. For example, the first search process performed according to the predefined MV search rule includes: from the first candidate MV, with a first step length as a search step length, searching in a first direction to obtain a new first candidate MV; from the second candidate MV, with the first step length as the search step length, searching in a second direction to obtain a new second candidate MV; and determining the new first matching cost according to the new first candidate MV and the new second candidate MV, where the first direction is in a mirrored relationship with the second direction.

It may be understood that, the new first matching cost is determined according to the new first candidate MV and the new second candidate MV as follows. A new first difference is determined based on sample values between a new first reference block pointed to by the new first candidate MV and a new second reference block pointed to by the new second candidate MV. A new second difference is determined based on sample values between the template of the current block and a template of the new first reference block pointed to by the new first candidate MV. A new third difference is determined based on sample values between the template of the current block and a template of the new second reference block pointed to by the new second candidate MV. The new first matching cost is determined at least according to the new first difference, the new second difference, and the new third difference.

At 1003, the first prediction MV and the second prediction MV are determined at least according to the two first matching costs obtained.

It may be understood that, after the encoder or decoder performs the first search process once, the new first matching cost obtained may not be a desired final matching cost. Exemplarily, in some embodiments, the encoder or decoder may implement the operations at 1003 as follows. When a first search termination condition is satisfied, the first prediction MV and the second prediction MV are determined according to the two first matching costs obtained. When the first search termination condition is not satisfied, the first search process is iterated from the new first candidate MV and the new second candidate MV until the first search termination condition is satisfied, and the first prediction MV and the second prediction MV are determined according to multiple first matching costs obtained.

Exemplarily, the first search termination condition may be that the number of first matching costs reaches a number threshold. Alternatively, the first search termination condition may be that a minimum value among currently-obtained first matching costs is less than or equal to a first cost threshold.

Exemplarily, in some embodiments, the first prediction MV is equal to an MV corresponding to a minimum first matching cost among the first matching costs obtained, and the second prediction MV is equal to the MV corresponding to the minimum first matching cost.

Embodiment 2

It may be understood that, determining the first prediction MV and the second prediction MV in a bi-directional synchronous search method has been described in embodiment 1. In embodiment 2, another search method, i.e., determining the first prediction MV and the second prediction MV through unidirectional search, will be described.

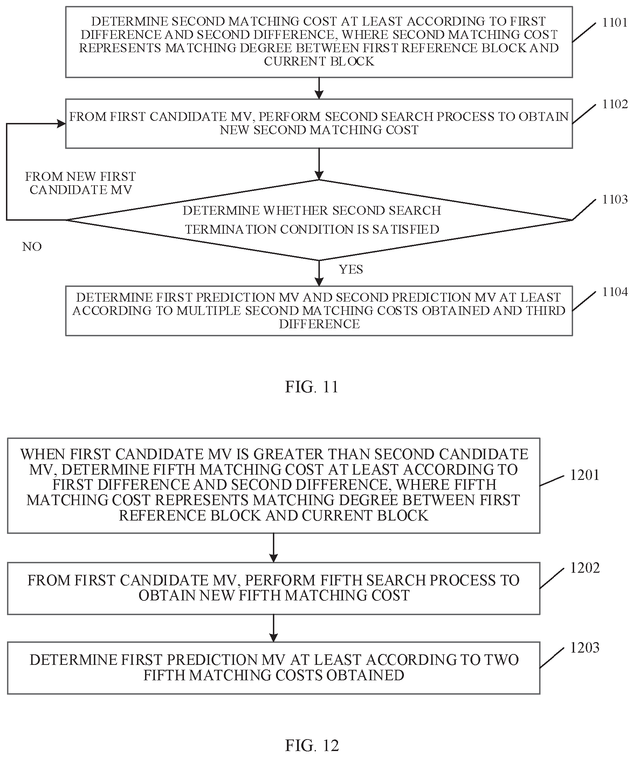

Specifically, in some embodiments, as illustrated in FIG. 11, the encoder or decoder may implement, through operations at 1101 to operations at 1104 below, the operations at 904, i.e., obtaining the first prediction MV and the second prediction MV of the current block by performing motion estimation on the current block at least according to the first difference, the second difference, and the third difference.

At 1101, a second matching cost is determined at least according to the first difference and the second difference, where the second matching cost represents a matching degree between the first reference block and the current block.

In a possible implementation, the encoder or decoder may implement the operations at 1101 as follows. The second matching cost is determined according to the first difference and the second difference.

For example, in some embodiments, the encoder or decoder may determine the second matching cost *cost* according to the following formula.

$$cost = costBM + costTM_0$$

In the above, *costBM* represents the first difference, and $costTM_0$ represents the second difference.

For another example, in some other embodiments, the encoder or decoder may also implement the operations at 1101 as follows. A first weighting factor for the first difference and a second weighting factor for the second difference are determined. The second matching cost is obtained by weighting the first difference and the second difference according to the first weighting factor and the second weighting factor.

Exemplarily, the encoder or decoder may determine the second matching cost *cost* according to the following formula.

$$cost = factorBM * costBM + factorTM_0 * costTM_0$$

In the above, *factorBM* represents the first weighting factor, and $factorTM_0$ represents the second weighting factor.

The first weighting factor and the second weighting factor may be preset values or values related to a size of the current block or a size of the template of the current block. That is, the encoder or decoder may determine the first weighting factor and the second weighting factor according to the size of the current block or the size of the template of the current block.

For example, the first weighting factor is equal to the number of samples in the template of the current block, and the second weighting factor is equal to the number of samples of the current block.

In another possible implementation, the encoder or decoder determines the second matching cost not only according to the first difference and the second difference, but also according to a first MVD of the first candidate MV. That is, the encoder or decoder may also implement the operations at 1101 as follows. The first MVD of the first candidate MV is determined. The second matching cost is determined according to the first difference, the second difference, and the first MVD.

For example, in some embodiments, the encoder or decoder may determine the second matching cost *cost* according to the following formula.

$$cost = costBM + costTM_0 + costMV_0$$

In the above, *costBM* represents the first difference, $costTM_0$ represents the second difference, and $costMV_0$ represents the first MVD of the first candidate MV.

For another example, in some other embodiments, the encoder or decoder may also determine the first matching cost as follows. A first weighting factor for the first difference, a second weighting factor for the second difference, and a fourth weighting factor for the first MVD are determined. The second matching cost is obtained by weighting the first difference, the second difference, and the first MVD according to the first weighting factor, the second weighting factor, and the fourth weighting factor.

Exemplarily, the encoder or decoder may determine the second matching cost *cost* according to the following formula.

$$cost = factorBM * costBM + factorTM_0 * costTM_0 + factorMV_0 * costMV_0$$

In the above, *factorBM* represents the first weighting factor, $factorTM_0$ represents the second weighting factor, and $factorMV_0$ represents the fourth weighting factor.

At 1102, from the first candidate MV, a second search process is performed to obtain a new second matching cost. The second search process includes: from the first candidate MV, with a second step length as a search step length, searching in a first direction to obtain a new first candidate MV; and determining the new second matching cost according to the second candidate MV and the new first candidate MV.

It may be understood that, the new second matching cost is determined according to the second candidate MV and the new first candidate MV as follows. A new first difference is determined based on sample values between a new first reference block pointed to by the new first candidate MV and the second reference block pointed to by the second candidate MV. A new second difference is determined based on sample values between the template of the current block and a template of the new first reference block pointed to by the new first candidate MV. The new second matching cost is determined at least according to the new first difference and the new second difference. That is, the determination of the new second matching cost is the same as the implementation of the operations at 1101.

It may be understood that, the unidirectional search is described in operations at 1102, i.e., in a search process, one of MVs in two reference directions changes, and the other of the MVs in the two reference directions remains unchanged. This means that in a search process, one of the second difference and the third difference does not change.

At 1103, whether a second search termination condition is satisfied is determined. When the second search termination condition is not satisfied, from the new first candidate MV, return to the operations at 1102, and iterate the second search process until the second search termination condition is satisfied. When the second search termination condition is satisfied, perform the operations at 1104.

Exemplarily, the second search termination condition may be that the number of second matching costs reaches a number threshold. Alternatively, the second search termination condition may be that a minimum value among currently-obtained second matching costs is less than or equal to a second cost threshold.

At 1104, the first prediction MV and the second prediction MV are determined at least according to multiple second matching costs obtained and the third difference.

Further, in some embodiments, based on a search result at 1103, a prediction MV in another direction may be further searched for. That is, the encoder or decoder may implement the operations at 1104 as follows. A first candidate MV corresponding to a minimum second matching cost among the multiple second matching costs obtained is determined as a third candidate MV. A fourth difference in sample values between a third reference block pointed to by the third candidate MV and the second reference block pointed to by the second candidate MV is determined. A third matching cost is determined at least according to the fourth difference and the third difference, where the third matching cost represents a matching degree between the second reference block and the current block. From the second candidate MV, a third search process is performed to obtain a new third matching cost, where the third search process includes: from the second candidate MV, with a third step length as the search step length, searching in a second direction to obtain a new second candidate MV; and determining the new third matching cost according to the third candidate MV and the new second candidate MV. When a third search termination condition is not satisfied, the third search process is iterated from the new second candidate MV until the third search termination condition is satisfied. When the third search termination condition is satisfied, the first prediction MV and the second prediction MV are determined according to multiple third matching costs obtained and the third candidate MV.

That is, in the third search process, the third candidate MV remains unchanged, and searching is performed starting from the second candidate MV.

Exemplarily, the third search termination condition may be that the number of third matching costs reaches a number threshold. Alternatively, the third search termination condition may be that a minimum value among currently-obtained third matching costs is less than or equal to a third cost threshold.

Exemplarily, in some embodiments, the first prediction MV and the second prediction MV are determined according to the multiple third matching costs obtained and the third candidate MV as follows. The third candidate MV is determined as the first prediction MV. A second candidate MV corresponding to a minimum third matching cost among the multiple third matching costs obtained is determined as the second prediction MV.

In some embodiments, the second prediction MV is determined according to the multiple third matching costs obtained and the third candidate MV as follows. A second candidate MV corresponding to a minimum third matching cost among the multiple third matching costs obtained is determined as the second prediction MV based on a determination that a second matching cost corresponding to the third candidate MV is greater than the minimum third matching cost.

In some embodiments, the first prediction MV is determined according to the multiple third matching costs obtained and the third candidate MV as follows. A fifth difference in sample values between the third reference block pointed to by the third candidate MV and a fourth reference block pointed to by the second prediction MV is determined. A first modified template of the current block is obtained by modifying the template of the current block according to a template of the fourth reference block. A sixth difference in sample values between a template of the third reference block and the first modified template is determined. A fourth matching cost is determined at least according to the fifth difference and the sixth difference, where the fourth matching cost represents a matching degree between the third reference block and the current block. From the third candidate MV, a fourth search process is performed to obtain a new fourth matching cost, where the fourth search process includes: from the third candidate MV, with a fourth step length as the search step length, searching in the first direction to obtain a new third candidate MV; and determining the new fourth matching cost according to the new third candidate MV and the second prediction MV. The first prediction MV is determined at least according to the two fourth matching costs obtained.

Further, in some embodiments, the first prediction MV is determined at least according to the two fourth matching costs obtained as follows. When a fourth search termination condition is satisfied, the first prediction MV is determined according to the two fourth matching costs obtained. When the fourth search termination condition is not satisfied, the fourth search process is iterated from the new third candidate MV until the fourth search termination condition is satisfied, and the first prediction MV is determined according to multiple fourth matching costs obtained.

Exemplarily, the fourth search termination condition may be that the number of fourth matching costs reaches a number threshold. Alternatively, the fourth search termination condition may be that a minimum value among currently-obtained fourth matching costs is less than or equal to a fourth cost threshold.

Exemplarily, in some embodiments, the first prediction MV is equal to a third candidate MV corresponding to a minimum fourth matching cost among the fourth matching costs obtained.

Exemplarily, in some embodiments, a sample value at each position of the first modified template is equal to twice a sample value at a corresponding position of the template of the current block minus a sample value at a corresponding position of the template of the fourth reference block.

In some embodiments, the third matching cost is determined at least according to the fourth difference and the third difference as follows. A sixth weighting factor for the fourth difference and a third weighting factor for the third difference are determined. The third matching cost is obtained by weighting the fourth difference and the third difference according to the sixth weighting factor and the third weighting factor.

In some other embodiments, the third matching cost is determined at least according to the fourth difference and the third difference as follows. A second MVD of the second candidate MV is determined. The third matching cost is determined according to the fourth difference, the third difference, and the second MVD.

Further, in some embodiments, the third matching cost is determined according to the fourth difference, the third difference, and the second MVD as follows. A sixth weighting factor for the fourth difference, a third weighting factor for the third difference, and a fifth weighting factor for the second MVD are determined. The third matching cost is obtained by weighting the fourth difference, the third difference, and the second MVD according to the sixth weighting factor, the third weighting factor, and the fifth weighting factor.

In some embodiments, the fourth matching cost is determined at least according to the fifth difference and the sixth difference as follows. A third MVD of the third candidate MV is determined. The fourth matching cost is determined according to the fifth difference, the sixth difference, and the third MVD.

Further, in some embodiments, the fourth matching cost is determined according to the fifth difference, the sixth difference, and the third MVD as follows. A seventh weighting factor for the fifth difference, an eighth weighting factor for the sixth difference, and a ninth weighting factor for the third MVD are determined. The fourth matching cost is obtained by weighting the fifth difference, the sixth difference, and the third MVD according to the seventh weighting factor, the eighth weighting factor, and the ninth weighting factor.

Embodiment 3

In some embodiments, as illustrated in FIG. 12, the encoder or decoder may also implement the operations at 904 through operations at 1201 to operations at 1204 below.

At 1201, when the second difference is greater than the third difference, a fifth matching cost is determined at least according to the first difference and the second difference, where the fifth matching cost represents a matching degree between the first reference block and the current block.

In a possible implementation, the encoder or decoder may implement the operations at 1201 as follows. The fifth matching cost is determined according to the first difference and the second difference.

For example, in some embodiments, the encoder or decoder may determine the fifth matching cost *cost* according to the following formula.

$$cost = costBM + costTM_{\mathrm{x}}$$

In the above, *costBM* represents the first difference, and *costTM*$_{\mathrm{x}}$ represents a greater template difference.

For another example, in some other embodiments, the encoder or decoder may also implement the operations at 1201 as follows. A first weighting factor for the first difference and a second weighting factor for the second difference are determined. The fifth matching cost is obtained by weighting the first difference and the second difference according to the first weighting factor and the second weighting factor.

Exemplarily, the encoder or decoder may determine the fifth matching cost *cost* according to the following formula.

$$cost = factorBM * costBM + factorTM_{\mathrm{x}} * costTM_{\mathrm{x}}$$

In the above, *factorBM* represents the first weighting factor, and *factorTM*$_{\mathrm{x}}$ represents the second weighting factor.

In another possible implementation, the encoder or decoder determines the fifth matching cost not only according to the first difference and the second difference, but also according to a first MVD of the first candidate MV. That is, the encoder or decoder may also implement the operations at 1201 as follows. The first MVD of the first candidate MV is determined. The fifth matching cost is determined according to the first difference, the second difference, and the first MVD.

For example, in some embodiments, the encoder or decoder may determine the fifth matching cost *cost* according to the following formula.

$$cost = costBM + costTM_{\mathrm{x}} + costMV_{\mathrm{x}}$$

In the above, *costBM* represents the first difference, *costTM*$_{\mathrm{x}}$ represents the second difference, and *costMV*$_{\mathrm{x}}$ represents the first MVD of the first candidate MV.

For another example, in some other embodiments, the fifth matching cost is determined according to the first difference, the second difference, and the first MVD as follows. A first weighting factor for the first difference, a second weighting factor for the second difference, and a fourth weighting factor for the first MVD are determined. The fifth matching cost is obtained by weighting the first difference, the second difference, and the first MVD according to the first weighting factor, the second weighting factor, and the fourth weighting factor.

Exemplarily, the encoder or decoder may determine the fifth matching cost *cost* according to the following formula.

$$cost = factorBM * costBM + factorTM_{\mathrm{x}} * costTM_{\mathrm{x}} + factorMV_{\mathrm{x}} * costMV_{\mathrm{x}}$$

In the above, *factorBM* represents the first weighting factor, *factorTM*$_{\mathrm{x}}$ represents the second weighting factor, and *factorMV*$_{\mathrm{x}}$ represents the fourth weighting factor.

In some embodiments, the encoder or decoder may determine the first candidate MV in the operations at 1201 as follows. A seventh difference in sample values between a template of a reference block pointed to by a first initial MV and the template of the current block is determined. A sixth matching cost is determined at least according to the seventh difference, where the sixth matching cost represents a matching degree between the reference block pointed to by the first initial MV and the current block. From the first initial MV, a sixth search process is performed to obtain a new sixth matching cost, where the sixth search process includes: from the first initial MV, with a sixth step length as the search step length, searching in the first direction to obtain a new first initial MV; and determining the new sixth matching cost according to the new first initial MV. The first candidate MV is determined at least according to the two sixth matching costs obtained.

Further, in some embodiments, the first candidate MV is determined at least according to the two sixth matching costs obtained as follows. When a sixth search termination condition is satisfied, the first candidate MV is determined according to the two sixth matching costs obtained. When the sixth search termination condition is not satisfied, the sixth search process is iterated until the sixth search termination condition is satisfied, and the first candidate MV is determined according to multiple sixth matching costs obtained.

Exemplarily, the sixth search termination condition may be that the number of sixth matching costs reaches a number threshold. Alternatively, the sixth search termination condition may be that a minimum value among currently-obtained sixth matching costs is less than or equal to a sixth cost threshold.

Exemplarily, in some embodiments, the first candidate MV is equal to a first initial MV corresponding to a minimum sixth matching cost among the sixth matching costs obtained.

In some embodiments, for the second difference described in the operations at 1201, the second difference in the sample values between the template of the current block and the template of the first reference block is determined as follows. A second modified template of the current block is obtained by modifying the template of the current block according to the template of the second reference block pointed to by the second candidate MV. A second difference in sample values between the second modified template and the template of the first reference block is determined.

Exemplarily, in some embodiments, a sample value at each position of the second modified template is equal to twice a sample value at a corresponding position of the template of the current block minus a sample value at a corresponding position of the template of the second reference block.

At 1202, from the first candidate MV, a fifth search process is performed to obtain a new fifth matching cost. The fifth search process includes: from the first candidate MV, with a fifth step length as a search step length, searching in a first direction to obtain a new first candidate MV; and determining the new fifth matching cost according to the new first candidate MV and the second candidate MV.

At 1203, the first prediction MV is determined at least according to the two fifth matching costs obtained.

In some embodiments, the encoder or decoder may implement operations at 1203 as follows. When a fifth search termination condition is satisfied, the first prediction MV is determined according to the two fifth matching costs obtained. When the fifth search termination condition is not satisfied, the fifth search process is iterated until the fifth search termination condition is satisfied, and the first prediction MV is determined according to multiple fifth matching costs obtained.

Exemplarily, the fifth search termination condition may be that the number of fifth matching costs reaches a number threshold. Alternatively, the fifth search termination condition may be that a minimum value among currently-obtained fifth matching costs is less than or equal to a fifth cost threshold.

Exemplarily, in some embodiments, the first prediction MV is equal to a first candidate MV corresponding to a minimum fifth matching cost among the multiple fifth matching costs obtained.

At 1204, the second prediction MV is determined according to the first prediction MV and the third difference.

In some embodiments, the encoder or decoder may implement the operations at 1204 as follows. An eighth difference in sample values between a fifth reference block pointed to by the first prediction MV and the second reference block pointed to by the second candidate MV is determined. A seventh matching cost is determined at least according to the eighth difference and the third difference, where the seventh matching cost represents a matching degree between the fifth reference block and the current block. From the second candidate MV, a seventh search process is performed to obtain a new seventh matching cost, where the seventh search process includes: from the second candidate MV, with a seventh step length as the search step length, searching in a second direction to obtain a new second candidate MV; and determining the new seventh matching cost according to the new second candidate MV and the first prediction MV. The second prediction MV is determined at least according to the two seventh matching costs obtained.

Further, in some embodiments, the second prediction MV is determined at least according to the two seventh matching costs obtained as follows. When a seventh search termination condition is satisfied, the second prediction MV is determined according to the two seventh matching costs obtained. When the seventh search termination condition is not satisfied, the seventh search process is iterated until the seventh search termination condition is satisfied, and the second prediction MV is determined according to multiple seventh matching costs obtained.

Exemplarily, the seventh search termination condition may be that the number of seventh matching costs reaches a number threshold. Alternatively, the seventh search termination condition may be that a minimum value among currently-obtained seventh matching costs is less than or equal to a seventh cost threshold.

Exemplarily, in some embodiments, the second prediction MV is equal to a second candidate MV corresponding to a minimum seventh matching cost among the seventh matching costs obtained.

In embodiment 3, the third difference in the sample values between the template of the current block and the template of the second reference block is determined as follows. A third modified template of the current block is obtained by modifying the template of the current block according to a template of a reference block pointed to by the first prediction MV. A third difference in sample values between the third modified template and the template of the second reference block is determined.

Further, in some embodiments, the third modified template of the current block is obtained by modifying the template of the current block according to the template of the reference block pointed to by the first prediction MV as follows. A sample value at each position of the third modified template is equal to twice a sample value at a corresponding position of the template of the current block minus a sample value at a corresponding position of the template of the reference block pointed to by the first prediction MV.

In some embodiments, the sixth matching cost is determined at least according to the seventh difference as follows. A fourth MVD of the first initial MV is determined. The sixth matching cost is determined according to the seventh difference and the fourth MVD.

Further, in some embodiments, the sixth matching cost is determined according to the seventh difference and the fourth MVD as follows. A tenth weighting factor for the seventh difference and an eleventh weighting factor for the fourth MVD are determined. The sixth matching cost is obtained by weighting the seventh difference and the fourth MVD according to the tenth weighting factor and the eleventh weighting factor.

In some embodiments, the seventh matching cost is determined at least according to the eighth difference and the third difference as follows. A twelfth weighting factor for the eighth difference and a third weighting factor for the third difference are determined. The seventh matching cost is obtained by weighting the eighth difference and the third difference according to the twelfth weighting factor and the third weighting factor.

In some other embodiments, the seventh matching cost is determined at least according to the eighth difference and the third difference as follows. A second MVD of the second candidate MV is determined. The seventh matching cost is determined according to the eighth difference, the third difference, and the second MVD.

Further, in some embodiments, the seventh matching cost is determined according to the eighth difference, the third difference, and the second MVD as follows. A twelfth weighting factor for the eighth difference, a third weighting factor for the third difference, and a fifth weighting factor for the second MVD are determined. The seventh matching cost is obtained by weighting the eighth difference, the third difference, and the second MVD according to the twelfth weighting factor, the third weighting factor, and the fifth weighting factor.

A method for determining the above weighting factors is described as follows.

In some embodiments, the first weighting factor to the twelfth weighting factor are all preset values.

In some other embodiments, the method further includes the following. The first weighting factor, the sixth weighting factor, the seventh weighting factor, and the twelfth weighting factor are determined according to a size of the current block or a size of the template of the current block.

Exemplarily, in some embodiments, the first weighting factor is equal to the number of samples in the template of the current block, the sixth weighting factor is equal to the number of samples in the template of the current block, the seventh weighting factor is equal to the number of samples in the template of the current block, and the twelfth weighting factor is equal to the number of samples in the template of the current block.

In some other embodiments, the method further includes the following. The second weighting factor, the third weighting factor, the eighth weighting factor, and the ninth weighting factor are determined according to a size of the current block or a size of the template of the current block.

Exemplarily, in some embodiments, the second weighting factor is equal to the number of samples of the current block, the third weighting factor is equal to the number of samples of the current block, the eighth weighting factor is equal to the number of samples of the current block, and the tenth weighting factor is equal to the number of samples of the current block.

In some other embodiments, the method further includes the following. The fourth weighting factor, the fifth weighting factor, the ninth weighting factor, and the eleventh weighting factor are determined according to a size of the current block or a size of the template of the current block.

In some embodiments, a distance between a first reference picture to which the first reference block belongs and a current picture to which the current block belongs is equal to or unequal to a distance between a second reference picture to which the second reference block belongs and the current picture to which the current block belongs.

In some embodiments, whether to proceed to obtaining the first prediction MV and the second prediction MV of the current block by performing motion estimation on the current block at least according to the first difference, the second difference, and the third difference is determined according to a relationship between the first candidate MV and the second candidate MV.

Further, in some embodiments, when the first candidate MV and the second candidate MV are asymmetric, proceed to obtaining the first prediction MV and the second prediction MV of the current block by performing motion estimation on the current block at least according to the first difference, the second difference, and the third difference.

Exemplarily, in some embodiments, when a ratio or difference between an absolute value of the first candidate MV and an absolute value of the second candidate MV is not within a corresponding range and/or a ratio or difference between an angle of the first candidate MV and an angle of the second candidate MV is not within the corresponding range, it is determined that the first candidate MV and the second candidate MV are asymmetric.

It may be noted that, methods for determining matching costs may be similar (with the difference being that values for calculating the matching costs may be different) or different. The matching costs may be obtained by performing weighted average on corresponding values based on weighting factors, or may be obtained by directly accumulating the values for calculating the matching costs.

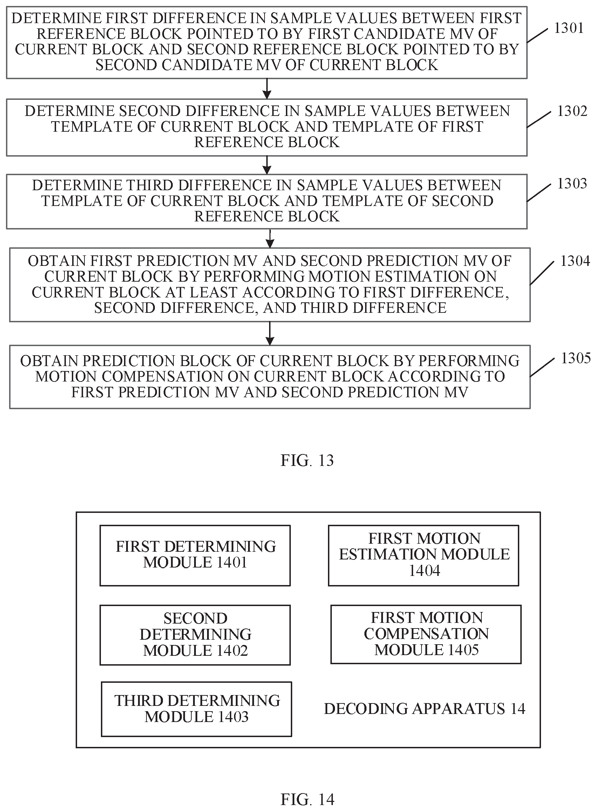

A decoding method is provided in embodiments of the disclosure. The decoding method is applied to a decoder. FIG. 13 is a schematic flowchart illustrating implementation of a decoding method provided in embodiments of the disclosure. As illustrated in FIG. 13, the decoding method includes operations at 1301 to operations at 1305 below.

At 1301, a first difference in sample values between a first reference block pointed to by a first candidate MV of a current block and a second reference block pointed to by a second candidate MV of the current block is determined.

At 1302, a second difference in sample values between a template of the current block and a template of the first reference block is determined.

At 1303, a third difference in sample values between the template of the current block and a template of the second reference block is determined.

At 1304, a first prediction MV and a second prediction MV of the current block are obtained by performing motion estimation on the current block at least according to the first difference, the second difference, and the third difference.

At 1305, a prediction block of the current block is obtained by performing motion compensation on the current block according to the first prediction MV and the second prediction MV.

It may be understood that, the decoder and an encoder use the same operations to obtain the prediction block of the current block. Therefore, for operations for obtaining the prediction block of the current block that are not described at the decoder side, reference is made to the operations for obtaining the prediction block of the current block performed by the encoder and related features above, which will not be repeated herein.

In embodiments of the disclosure, during motion estimation on the current block, not only the second difference in the sample values between the template of the current block and the template of the first reference block pointed to by the first candidate MV of the current block as well as the third difference in the sample values between the template of the current block and the template of the second reference block pointed to by the second candidate MV of the current block are used, but also the first difference in the sample values between the first reference block pointed to by the first candidate MV and the second reference block pointed to by the second candidate MV is taken into consideration. As such, it is conducive to improving the accuracy of motion estimation on the current block, i.e., the accuracy of the first prediction MV and the second prediction MV of the current block, thereby improving the accuracy of inter prediction for the current block and enhancing the video decoding quality.

In some embodiments, the decoding method further includes the following. A bitstream is parsed to obtain a residual block of the current block. A reconstructed block of the current block is determined according to the prediction block and the residual block of the current block.

The following will describe an exemplary application of embodiments of the disclosure in an actual application scenario.

BM and TM each have their respective shortcomings, but they are also complementary to each other. Therefore, BM and TM can be used in combination.

A scheme of combining BM and TM is as follows:

First step, whole-block-based BM motion vector refinement.

Second step, whole-block-based TM motion vector refinement.

Third step, subblock-based BM motion vector refinement. The size of a subblock in this step may be 16x16.

Fourth step, subblock-based BDOF motion vector refinement. The size of a subblock in this step may be 8x8.

More specifically, a mirrored search method is used for BM refinement, and a unidirectional plus iterative search method is used for TM refinement. One method is to use only the first two steps of the bi-directional template-matching search during TM refinement. That is, only a unidirectional search method is used for refining MVs in two reference directions separately, without using an iterative search method.

In this scheme, BM, TM, and optical flow are used. Each step is independent. After whole-block BM search is completed, whole-block TM search is performed. After whole-block TM search is completed, subblock BM search is performed.

Another scheme is to substantially combine BM and TM.

For a certain group of bi-directional motion information found, an MV corresponding to RPL0 is $MV_0$ (i.e., the first candidate MV), and an MV corresponding to RPL1 is $MV_1$ (i.e., the second candidate MV).

A BM matching cost between two reference blocks is represented by *costBM*, and in one method, *costBM* is an SAD or SATD (i.e., an example of the first difference) between a reference block pointed to by $MV_0$ and a reference block pointed to by $MV_1$.

A TM matching cost between a template of a reference block corresponding to RPL0 and the template of the current block is represented by $costTM_0$, and in one method, $costTM_0$ is an SAD or SATD (i.e., an example of the second difference) between a template of the reference block pointed to by $MV_0$ and the template of the current block. A TM matching cost between a template of a reference block corresponding to RPL1 and the template of the current block is represented by $costTM_1$, and in one method, $costTM_1$ is an SAD or SATD (i.e., an example of the third difference) between a template of the reference block pointed to by $MV_1$ and the template of the current block.

A cost of a motion vector (difference) of an MVD corresponding to RPL0 is represented by $costMV_0$ (i.e., a first MVD), and in one method, $costMV_0$ is a piecewise function (i.e., an example of the first MVD ) for the MVD corresponding to RPL0. A cost of a motion vector difference of an MVD corresponding to RPL1 is represented by $costMV_1$ (i.e., a second MVD), and in one method, $costMV_1$ is a piecewise function (i.e., an example of the first MVD ) for the MVD corresponding to RPL1.

In this case, currently, a matching cost $cost$ for bi-directional motion information is calculated as follows.

$$cost = costBM + costTM_0 + costTM_1 + costMV_0 + costMV_1$$

If MVs in two directions move in a mirrored manner, the above formula may also be simplified to:

$$cost = costBM + costTM_0 + costTM_1 + costMV$$

In the above, $costMV$ is a cost of a total motion vector (difference). Absolute values of MVDs in the two directions are the same, and thus can be calculated together.

Optionally, the calculation of the cost of the motion vector (difference) may be omitted, i.e.,

$$cost = costBM + costTM_0 + costTM_1$$

Further, a different factor may be set for each cost to adjust their respective proportions, for example,

$$cost = factorBM * costBM + factorTM_0 * costTM_0 + factorTM_1 * costTM_1$$
$$+ factorMV_0 * costMV_0 + factorMV_1 * costMV_1$$

In the above, $factorBM$, $factorTM_0$, $factorTM_1$, $factorMV_0$, and $factorMV_1$ may be preset values, for example, 1, 2, 3, 4, etc., or may be values calculated according to a size of a block.

Examples of calculating a factor:

An example of calculating the factor is as follows. A width of a current block is represented by $width$, a height of the current block is represented by $height$, a height of a top template and a width of a left template are represented by $templateSize$, a width of the top template is equal to the width of the current block, and a height of the left template is equal to the height of the current block. The number of samples in a template satisfies $numPixTemplate = (width+height) * templateSize$. The number of samples of the current block satisfies $numPixCurr = width * height$. An example is to set:

$$factorBM = numPixTemplate$$

$$factorTM_0 = factorTM_1 = numPixCurr$$

Another example is to set:

$$factorBM = 1$$

$$factorTM_0 = factorTM_1 = numPixCurr/numPixTemplate$$

Certainly, division may be replaced by right shift or table lookup.

Variations in cost calculation:

If MVs in two reference directions change simultaneously in a search process, it means that values of *costBM*, *costTM$_0$*, and *costTM$_1$* may all change, and thus the use of the above formula is appropriate. For example, in a current DMVR search process, the MVs in the two reference directions move in a mirrored manner, and each group of MVs may cause changes in the values of *costBM*, *costTM$_0$*, and *costTM$_1$*. Another possible search method is the above unidirectional search, i.e., in a search process, one of the MVs in the two reference directions changes, and the other of the MVs in the two reference directions remains unchanged. This means that in a search process, one of *costTM$_0$* and *costTM$_1$* does not change. For example, in a unidirectional search process for an MV *MV$_0$* corresponding to RPL0, if an MV *MV$_1$* corresponding to RPL1 remains unchanged, then a value of *costTM$_0$* will change in the search process, while a value of *costTM$_1$* will not change in the search process.

In a search process, if an MV in a reference direction remains unchanged, then a method for calculating *cost* may be simplified to:

$$cost = costBM + costTM_\mathrm{x} + costMV_\mathrm{x}$$

or

$$cost = factorBM * costBM + factorTM_\mathrm{x} * costTM_\mathrm{x} + factorMV_\mathrm{x} * costMV_\mathrm{x}$$

In the above, x is 0 or 1, which indicates a changing reference direction.

Optionally, the calculation of the cost of the motion vector (difference) may be omitted.

Application scenarios for combining BM and TM:

A possible scenario is for a mirrored search method. A possible example is that during DMVR or MDMVR search, a method using only BM without TM is replaced with a method combining BM and TM. That is, during calculation of a group of MVs generated by the mirrored movement, the above method combining BM and TM is used.

A possible scenario is for unidirectional search. A possible example is that during refinement of an MV corresponding to RPL0 or RPL1 using TM, a method using only TM is replaced with a method combining BM and TM. That is, during calculation of an MV generated by the movement of the MV corresponding to RPL0 or RPL1, the above method combining BM and TM is used.

TM may be replaced with the method combining BM and TM in all steps, or TM may be replaced with the method combining BM and TM only in certain steps. In other words, the method combining BM and TM may be used for the above unidirectional plus iterative search method.

Embodiment 1, in all steps, TM is replaced with the method combining BM and TM.

First step, the method combining BM and TM is used for refining *MV$_0$* corresponding to RPL0, and during calculation of a matching cost, *cost = costBM + costTM$_0$* is used. A minimum cost *minCost$_0$* in this process is recorded.

Second step, the method combining BM and TM is used for refining *MV$_1$* corresponding to RPL1, and during calculation of a matching cost, *cost = costBM + costTM$_1$* is used. A minimum cost *minCost$_1$* in this process is recorded.

Third step, *minCost$_0$* is compared with *minCost$_1$*. A reference direction corresponding to a greater cost is denoted as *X*, where *X* is 0 or 1, and a reference direction corresponding to a smaller cost is denoted as *1-X*. The method combining BM and TM is used again for refining *MV$_x$* corresponding to RPLX, and during calculation of a matching cost, *cost = costBM + costTM$_x$* is used. In this refinement, during calculation of the matching cost, a template of a reference block located by *MV$_x$* is compared with a modified template of the current block. A possible method is that a value at each position of the modified template of the current block is equal to twice a value at a corresponding position of the template of the current block minus a value at a corresponding position of a template of a reference block located by the latest *MV$_{1-x}$*.

Embodiment 2, TM is replaced with the method combining BM and TM in only the third step and the four step.

First step, TM is used for refining *MV$_0$* corresponding to RPL0, and during calculation of a matching cost, a template of a reference block located by *MV$_0$* is compared with a template of a current block. A minimum cost *minCost$_0$* in this process is recorded.

Second step, TM is used for refining *MV$_1$* corresponding to RPL1, and during calculation of a matching cost, a template of a reference block located by *MV$_1$* is compared with the template of the current block. A minimum cost *minCost$_1$* in this process is recorded.

Third step, *minCost$_0$* is compared with *minCost$_1$*. A reference direction corresponding to a greater cost is denoted as *X*, where *X* is 0 or 1, and a reference direction corresponding to a smaller cost is denoted as *1-X*. The method combining BM and TM is used for refining *MV$_x$* corresponding to RPLX, and during calculation of a matching cost, *cost = costBM +*

$costTM_x$ is used. In this refinement, during calculation of the matching cost, a template of a reference block located by $MV_x$ is compared with a modified template of the current block. A possible method is that a value at each position of the modified template of the current block is equal to twice a value at a corresponding position of the template of the current block minus a value at a corresponding position of a template of a reference block located by the latest $MV_{1-x}$.

Fourth step, the method combining BM and TM is used for refining $MV_{1-x}$ corresponding to RPL(1-X), and during calculation of a matching cost, $cost = costTM + costTM_{1-x}$ is used. In this refinement, during calculation of the matching cost, a template of a reference block located by $MV_{1-x}$ is compared with a modified template of the current block. A possible method is that a value at each position of the modified template of the current block is equal to twice a value at a corresponding position of the template of the current block minus a value at a corresponding position of a template of a reference block located by the latest $MV_x$.

Restricted conditions:

One restricted condition of DMVR is that two reference pictures are respectively located on two sides of a current picture, i.e., one reference picture is before the current picture and the other reference picture is after the current picture, and distances from the two reference pictures to the current picture are equal. This distance may refer to a temporal distance, or may be calculated based on a value of POC.

One possible restricted condition of the method combining BM and TM is that two reference pictures are respectively located on two sides of a current picture, i.e., one reference picture is before the current picture and the other reference picture is after the current picture, but distances from the two reference pictures to the current picture are not required to be equal. That is, the method combining BM and TM can be used when the distances from the two reference pictures to the current picture are unequal. A possible restricted condition is that: an existing method is used when the distances from the two reference pictures to the current picture are equal, and the method combining BM and TM is used when the distances from the two reference pictures to the current picture are unequal.

In another aspect, whether to use the method combining BM and TM may be determined according to values of $MV_0$ corresponding to RPL0 and $MV_1$ corresponding to RPL1.

An example is that the method combining BM and TM is used when $MV_0$ and $MV_1$ are asymmetric. An example of determining whether $MV_0$ and $MV_1$ are symmetric is as follows.

There are two aspects. In one aspect, whether absolute values of $MV_0$ and $MV_1$ are similar is determined. In the other aspect, whether angles of $MV_0$ and $MV_1$ are similar is determined.

1. Determine whether the absolute values of $MV_0$ and $MV_1$ are similar:

An absolute value $absMV_x = \sqrt{MV_x[0]^2 + MV_x[1]^2}$ of $MV_x$ is calculated, where x is 0 or 1, $MV_x[0]$ is a component of $MV_x$ in a horizontal direction, and $MV_x[1]$ is a component of $MV_x$ in a vertical direction. If $0.9 < \frac{absMV_0}{absMV_1} < 1.1$ , then the absolute values of $MV_0$ and $MV_1$ are considered to be similar, and otherwise, the absolute values of $MV_0$ and $MV_1$ are considered to be not similar. Herein, 0.9 and 1.1 are preset thresholds, or may be set to other values.

2. Determine whether the angles of $MV_0$ and $MV_1$ are similar:

An angle $angMV_x = actan \frac{MV_x[0]}{MV_x[1]} * \frac{180}{\pi}$ of $MV_x$ is calculated, where $x$ is 0 or 1, $MV_x[0]$ is a component of $MV_x$ in a horizontal direction, and $MV_x[1]$ is a component of $MV_x$ in a vertical direction. If $abs\,(angMV_0 - angMV_1) < 10$, then the angles of $MV_0$ and $MV_1$ are considered to be similar, and otherwise, the angles of $MV_0$ and $MV_1$ are considered to be not similar. Herein, 10 is a preset threshold, or may be set to another value.

For ease of hardware implementation, the above square root, division, and other operations may be replaced by table lookup or right shift.

A more accurate MV can be derived by combining BM and TM, thereby enhancing compression efficiency.

It may be noted that, although various operations of the method of the disclosure are described in a particular order in the accompanying drawings, this does not require or imply that the operations must be performed in the particular order, or that all of the operations illustrated must be performed to achieve a desired result. Additionally or alternatively, some operations may be omitted, multiple operations may be combined into one operation for performing, and/or one operation may be decomposed into multiple operations for performing. Alternatively, operations in different embodiments may be combined into a new technical solution.

Based on the foregoing embodiments, a decoding apparatus is provided in embodiments of the disclosure. The decoding apparatus is applied to a decoder. FIG. 14 is a schematic structural diagram of a decoding apparatus provided in embodiments of the disclosure. As illustrated in FIG. 14, the decoding apparatus 14 includes a first determining module 1401, a second determining module 1402, a third determining module 1403, a first motion estimation module 1404, and a first motion compensation module 1405. The first determining module 1401 is configured to determine a first difference in sample values between a first reference block pointed to by a first candidate MV of a current block and a second reference block pointed to by a second candidate MV of the current block. The second determining module 1402 is configured to determine a second difference in sample values between a template of the current block and a template of the first reference block. The third determining module 1403 is configured to determine a third difference in sample values between the template of the current block and a template of the second reference block. The first motion estimation module 1404 is configured to obtain a first prediction MV and a second prediction MV of the current block by performing motion estimation on the current block at least according to the first difference, the second difference, and the third difference. The first motion compensation module 1405 is configured to obtain a prediction block of the current block by performing motion compensation on the current block according to the first prediction MV and the second prediction MV.

In some embodiments, the first motion estimation module 1404 is configured to determine a first matching cost at least according to the first difference, the second difference, and the third difference, where the first matching cost represents a matching degree between each of the first reference block and the second reference block and the current block. The first motion estimation module 1404 is further configured to: from the first candidate MV and the second candidate MV, perform a first search process to obtain a new first matching cost. The first search process includes: from the first candidate MV, with a first step length as a search step length, searching in a first direction to obtain a new first candidate MV; from the second candidate MV, with the first step length as the search step length, searching in a second direction to obtain a new second candidate MV; and determining the new first matching cost according to the new first candidate MV and the new second candidate MV, where the first direction is in a mirrored relationship with the second direction. The first motion estimation module 1404 is further configured to determine the first prediction MV and the second prediction MV at least according to the two first matching costs obtained.

Further, in some embodiments, the first motion estimation module 1404 is configured to determine the first prediction MV and the second prediction MV according to the two first matching costs obtained, when a first search termination is satisfied.

Further, in some embodiments, the first motion estimation module 1404 is configured to iterate the first search process from the new first candidate MV and the new second candidate MV until a first search termination condition is satisfied, and determine the first prediction MV and the second prediction MV according to multiple first matching costs obtained, when the first search termination condition is not satisfied.

Exemplarily, in some embodiments, the first prediction MV is equal to an MV corresponding to a minimum first matching cost among the first matching costs obtained, and the second prediction MV is equal to the MV corresponding to the minimum first matching cost.

Further, in some embodiments, the first motion estimation module 1404 is configured to determine a first weighting factor for the first difference, a second weighting factor for the second difference, and a third weighting factor for the third difference; and obtain the first matching cost by weighting the first difference, the second difference, and the third difference according to the first weighting factor, the second weighting factor, and the third weighting factor.

Further, in some other embodiments, the first motion estimation module 1404 is configured to determine a first MVD of the first candidate MV and a second MVD of the second candidate MV; and determine the first matching cost according to the first difference, the second difference, the third difference, the first MVD, and the second MVD.

Further, in some other embodiments, the first motion estimation module 1404 is configured to determine a first weighting factor for the first difference, a second weighting factor for the second difference, a third weighting factor for the third difference, a fourth weighting factor for the first MVD, and a fifth weighting factor for the second MVD. The first motion estimation module 1404 is further configured to obtain the first matching cost by weighting the first difference, the second difference, the third difference, the first MVD, and the second MVD according to the first weighting factor, the second weighting factor, the third weighting factor, the fourth weighting factor, and the fifth weighting factor.

In some embodiments, the first motion estimation module 1404 is configured to determine a second matching cost at least according to the first difference and the second difference, where the second matching cost represents a matching degree between the first reference block and the current block. The first motion estimation module 1404 is further configured to: from the first candidate MV, perform a second search process to obtain a new second matching cost, where the second search process includes: from the first candidate MV, with a second step length as a search step length, searching in a first direction to obtain a new first candidate MV; and determining the new second matching cost according to the second candidate MV and the new first candidate MV. The first motion estimation module 1404 is further configured to iterate the second search process from the new first candidate MV until a second search termination condition is satisfied, when the second search termination condition is not satisfied. The first motion estimation module 1404 is further configured to determine the first prediction MV and the second prediction MV at least according to multiple second matching costs obtained and the third difference, when the second search termination condition is satisfied.

Further, in some other embodiments, the first motion estimation module 1404 is configured to determine a first candidate MV corresponding to a minimum second matching cost among the multiple second matching costs obtained as a third candidate MV. The first motion estimation module 1404 is further configured to determine a fourth difference in sample values between a third reference block pointed to by the third candidate MV and the second reference block pointed to by the second candidate MV. The first motion estimation module 1404 is further configured to determine a third matching cost at least according to the fourth difference and the third difference, where the third matching cost represents a matching degree between the second reference block and the current block. The first motion estimation module 1404 is further configured to: from the second candidate MV, perform a third search process to obtain a new third matching cost, where the third search process includes: from the second candidate MV, with a third step length as the search step length, searching in a second direction to obtain a new second candidate MV; and determining the new third matching cost according to the third candidate MV and the new second candidate MV. The first motion estimation module 1404 is further configured to iterate the third search process from the new second candidate MV until a third search termination condition is satisfied, when the third search termination condition is not satisfied. The first motion estimation module 1404 is further configured to determining the first prediction MV and the second prediction MV according to multiple third matching costs obtained and the third candidate MV, when the third search termination condition is satisfied.

Exemplarily, in some embodiments, the first motion estimation module 1404 is configured to determine the third candidate MV as the first prediction MV; and determine a second candidate MV corresponding to a minimum third matching cost among the multiple third matching costs obtained as the second prediction MV.

Exemplarily, in some embodiments, the first motion estimation module 1404 is configured to determine, based on a determination that a second matching cost corresponding to the third candidate MV is greater than a minimum third matching cost among the multiple third matching costs obtained, a second candidate MV corresponding to the minimum third matching cost as the second prediction MV.

Further, in some embodiments, the first motion estimation module 1404 is configured to determine a fifth difference in sample values between the third reference block pointed to by the third candidate MV and a fourth reference block pointed to by the second prediction MV. The first motion estimation module 1404 is further configured to obtain a first modified template of the current block by modifying the template of the current block according to a template of the fourth reference block. The first motion estimation module 1404 is further configured to determine a sixth difference in sample values between a template of the third reference block and the first modified template. The first motion estimation module 1404 is further configured to determine a fourth matching cost at least according to the fifth difference and the sixth difference, where the fourth matching cost represents a matching degree between the third reference block and the current block. The first motion estimation module 1404 is further configured to: from the third candidate MV, perform a fourth search process to obtain a new fourth matching cost, where the fourth search process includes: from the third candidate MV, with a fourth step length as the search step length, searching in the first direction to obtain a new third candidate MV; and determining the new fourth matching cost according to the new third candidate MV and the second prediction MV. The first motion estimation module 1404 is further configured to determine the first prediction MV at least according to the two fourth matching costs obtained.

Further, in some embodiments, the first motion estimation module 1404 is configured to determine the first prediction MV according to the two fourth matching costs obtained, when a fourth search termination condition is satisfied.

Further, in some embodiments, the first motion estimation module 1404 is configured to iterate the fourth search process from the new third candidate MV until the fourth search termination condition is satisfied, and determine the first prediction MV according to multiple fourth matching costs obtained, when a fourth search termination condition is not satisfied.

Exemplarily, in some embodiments, the first prediction MV is equal to a third candidate MV corresponding to a minimum fourth matching cost among the fourth matching costs obtained.

Exemplarily, in some embodiments, a sample value at each position of the first modified template is equal to twice a sample value at a corresponding position of the template of the current block minus a sample value at a corresponding position of the template of the fourth reference block.

Further, in some embodiments, the first motion estimation module 1404 is configured to determine a first weighting factor for the first difference and a second weighting factor for the second difference; and obtain the second matching cost by weighting the first difference and the second difference according to the first weighting factor and the second weighting factor.

Further, in some other embodiments, the first motion estimation module 1404 is configured to determine a first MVD of the first candidate MV; and determine the second matching cost according to the first difference, the second difference, and the first MVD.

Further, in some embodiments, the first motion estimation module 1404 is configured to determine a first weighting factor for the first difference, a second weighting factor for the second difference, and a fourth weighting factor for the first MVD; and obtain the second matching cost by weighting the first difference, the second difference, and the first MVD according to the first weighting factor, the second weighting factor, and the fourth weighting factor.

Further, in some embodiments, the first motion estimation module 1404 is configured to determine a sixth weighting factor for the fourth difference and a third weighting factor for the third difference; and obtain the third matching cost by weighting the fourth difference and the third difference according to the sixth weighting factor and the third weighting factor.

Further, in some embodiments, the first motion estimation module 1404 is configured to determine a second MVD of the second candidate MV; and determine the third matching cost according to the fourth difference, the third difference, and the second MVD.

Exemplarily, in some embodiments, the first motion estimation module 1404 is configured to determine a sixth weighting factor for the fourth difference, a third weighting factor for the third difference, and a fifth weighting factor for the second MVD; and obtain the third matching cost by weighting the fourth difference, the third difference, and the second MVD according to the sixth weighting factor, the third weighting factor, and the fifth weighting factor.

Further, in some embodiments, the first motion estimation module 1404 is configured to determine a third MVD of the third candidate MV; and determine the fourth matching cost according to the fifth difference, the sixth difference, and the third MVD.

Exemplarily, in some embodiments, the first motion estimation module 1404 is configured to determine a seventh weighting factor for the fifth difference, an eighth weighting factor for the sixth difference, and a ninth weighting factor for the third MVD; and obtain the fourth matching cost by weighting the fifth difference, the sixth difference, and the third MVD according to the seventh weighting factor, the eighth weighting factor, and the ninth weighting factor.

In some embodiments, the first motion estimation module 1404 is configured to determine a fifth matching cost at least according to the first difference and the second difference when the second difference is greater than the third difference, where the fifth matching cost represents a matching degree between the first reference block and the current block. The first motion estimation module 1404 is further configured to: from the first candidate MV, perform a fifth search process to obtain a new fifth matching cost, where the fifth search process includes: from the first candidate MV, with a fifth step length as a search step length, searching in a first direction to obtain a new first candidate MV; and determining the new fifth matching cost according to the new first candidate MV and the second candidate MV. The first motion estimation module 1404 is further configured to determine the first prediction MV at least according to the two fifth matching costs obtained. The first motion estimation module 1404 is further configured to determine the second prediction MV according to the first prediction MV and the third difference.

Further, in some embodiments, the first motion estimation module 1404 is configured to determine the first prediction MV according to the two fifth matching costs obtained, when a fifth search termination condition is satisfied.

Further, in some embodiments, the first motion estimation module 1404 is configured to iterate the fifth search process until a fifth search termination condition is satisfied, and determine the first prediction MV according to multiple fifth matching costs obtained, when the fifth search termination condition is not satisfied.

Exemplarily, in some embodiments, the first prediction MV is equal to a first candidate MV corresponding to a minimum fifth matching cost among the multiple fifth matching costs obtained.

In some embodiments, the first motion estimation module 1404 is further configured to determine a seventh difference in sample values between a template of a reference block pointed to by a first initial MV and the template of the current block. The first motion estimation module 1404 is further configured to determine a sixth matching cost at least according to the seventh difference, where the sixth matching cost represents a matching degree between the reference block pointed to by the first initial MV and the current block. The first motion estimation module 1404 is further configured to: from the first initial MV, perform a sixth search process to obtain a new sixth matching cost, where the sixth search process includes: from the first initial MV, with a sixth step length as the search step length, searching in the first direction to obtain a new first initial MV; and determining the new sixth matching cost according to the new first initial MV. The first motion estimation module 1404 is further configured to determine the first candidate MV at least according to the two sixth matching costs obtained.

Further, in some embodiments, the first motion estimation module 1404 is configured to determine the first candidate MV according to the two sixth matching costs obtained, when a sixth search termination condition is satisfied.

Further, in some embodiments, the first motion estimation module 1404 is configured to iterate the sixth search process until a sixth search termination condition is satisfied, and determine the first candidate MV according to multiple sixth matching costs obtained, when the sixth search termination condition is not satisfied.

Exemplarily, in some embodiments, the first candidate MV is equal to a first initial MV corresponding to a minimum sixth matching cost among the sixth matching costs obtained.

In some embodiments, the second determining module 1402 is configured to obtain a second modified template of the current block by modifying the template of the current block according to the template of the second reference block pointed to by the second candidate MV; and determine a second difference in sample values between the second modified template and the template of the first reference block.

Exemplarily, in some embodiments, a sample value at each position of the second modified template is equal to twice a sample value at a corresponding position of the template of the current block minus a sample value at a corresponding position of the template of the second reference block.

In some embodiments, the first motion estimation module 1404 is configured to determine an eighth difference in sample values between a fifth reference block pointed to by the first prediction MV and the second reference block pointed to by the second candidate MV. The first motion estimation module 1404 is further configured to determine a seventh matching cost at least according to the eighth difference and the third difference, where the seventh matching cost represents a matching degree between the fifth reference block and the current block. The first motion estimation module 1404 is further configured to: from the second candidate MV, perform a seventh search process to obtain a new seventh matching cost, where the seventh search process includes: from the second candidate MV, with a seventh step length as the search step length, searching in a second direction to obtain a new second candidate MV; and determining the new seventh matching cost according to the new second candidate MV and the first prediction MV. The first motion estimation module 1404 is further configured to determine the second prediction MV at least according to the two seventh matching costs obtained.

Further, in some embodiments, the first motion estimation module 1404 is configured to determine the second prediction MV according to the two seventh matching costs obtained, when a seventh search termination condition is satisfied.

Further, in some embodiments, the first motion estimation module 1404 is configured to iterate the seventh search process until a seventh search termination condition is satisfied, and determine the second prediction MV according to multiple seventh matching costs obtained, when the seventh search termination condition is not satisfied.

Exemplarily, in some embodiments, the second prediction MV is equal to a second candidate MV corresponding to a minimum seventh matching cost among the seventh matching costs obtained.

In some embodiments, the first motion estimation module 1404 is configured to obtain a third modified template of the current block by modifying the template of the current block according to a template of a reference block pointed to by the first prediction MV; and determine a third difference in sample values between the third modified template and the template of the second reference block.

Exemplarily, in some embodiments, a sample value at each position of the third modified template is equal to twice a sample value at a corresponding position of the template of the current block minus a sample value at a corresponding position of the template of the reference block pointed to by the first prediction MV.

In some embodiments, the first motion estimation module 1404 is configured to determine a first weighting factor for the first difference and a second weighting factor for the second difference; and obtain the fifth matching cost by weighting the first difference and the second difference according to the first weighting factor and the second weighting factor.

In some embodiments, the first motion estimation module 1404 is configured to determine a first MVD of the first candidate MV; and determine the fifth matching cost according to the first difference, the second difference, and the first MVD.

In some embodiments, the first motion estimation module 1404 is configured to determine a first weighting factor for the first difference, a second weighting factor for the second difference, and a fourth weighting factor for the first MVD; and obtain the fifth matching cost by weighting the first difference, the second difference, and the first MVD according to the first weighting factor, the second weighting factor, and the fourth weighting factor.

In some embodiments, the first motion estimation module 1404 is configured to determine a fourth MVD of the first initial MV; and determine the sixth matching cost according to the seventh difference and the fourth MVD.

In some embodiments, the first motion estimation module 1404 is configured to determine a tenth weighting factor for the seventh difference and an eleventh weighting factor for the fourth MVD; and obtain the sixth matching cost by weighting the seventh difference and the fourth MVD according to the tenth weighting factor and the eleventh weighting factor.

In some embodiments, the first motion estimation module 1404 is configured to determine a twelfth weighting factor for the eighth difference and a third weighting factor for the third difference; and obtain the seventh matching cost by weighting the eighth difference and the third difference according to the twelfth weighting factor and the third weighting factor.

In some embodiments, the first motion estimation module 1404 is configured to determine a second MVD of the second candidate MV; and determine the seventh matching cost according to the eighth difference, the third difference, and the second MVD.

In some embodiments, the first motion estimation module 1404 is configured to determine a twelfth weighting factor for the eighth difference, a third weighting factor for the third difference, and a fifth weighting factor for the second MVD; and obtain the seventh matching cost by weighting the eighth difference, the third difference, and the second MVD according to the twelfth weighting factor, the third weighting factor, and the fifth weighting factor.

In some embodiments, the first weighting factor to the twelfth weighting factor are all preset values.

In some embodiments, the first motion estimation module 1404 is further configured to determine the first weighting factor, the sixth weighting factor, the seventh weighting factor, and the twelfth weighting factor according to a size of the current block or a size of the template of the current block.

Exemplarily, in some embodiments, the first weighting factor is equal to the number of samples in the template of the current block, the sixth weighting factor is equal to the number of samples in the template of the current block, the seventh weighting factor is equal to the number of samples in the template of the current block, and the twelfth weighting factor is equal to the number of samples in the template of the current block.

In some embodiments, the first motion estimation module 1404 is further configured to determine the second weighting factor, the third weighting factor, the eighth weighting factor, and the ninth weighting factor according to a size of the current block or a size of the template of the current block.

Exemplarily, in some embodiments, the second weighting factor is equal to the number of samples of the current block, the third weighting factor is equal to the number of samples of the current block, the eighth weighting factor is equal to the number of samples of the current block, and the tenth weighting factor is equal to the number of samples of the current block.

In some embodiments, the first motion estimation module 1404 is further configured to determine the fourth weighting factor, the fifth weighting factor, the ninth weighting factor, and the eleventh weighting factor according to a size of the current block or a size of the template of the current block.

In some embodiments, a distance between a first reference picture to which the first reference block belongs and a current picture to which the current block belongs is equal to or unequal to a distance between a second reference picture to which the second reference block belongs and the current picture to which the current block belongs.

In some embodiments, the first motion estimation module 1404 is further configured to determine, according to a relationship between the first candidate MV and the second candidate MV, whether to proceed to obtaining the first prediction MV and the second prediction MV of the current block by performing motion estimation on the current block at least according to the first difference, the second difference, and the third difference

In some embodiments, the first motion estimation module 1404 is further configured to proceed to obtaining the first prediction MV and the second prediction MV of the current block by performing motion estimation on the current block at least according to the first difference, the second difference, and the third difference, when the first candidate MV and the second candidate MV are asymmetric.

In some embodiments, the first motion estimation module 1404 is further configured to determine that the first candidate MV and the second candidate MV are asymmetric, when a ratio or difference between an absolute value of the first candidate MV and an absolute value of the second candidate MV is not within a corresponding range and/or a ratio or difference between an angle of the first candidate MV and an angle of the second candidate MV is not within the corresponding range.

In some embodiments, the decoding apparatus 14 further includes a decoding module. The decoding module is configured to parse a bitstream to obtain a residual block of the current block; and determine a reconstructed block of the current block according to the prediction block and the residual block of the current block.

The above description of decoding apparatus embodiments is similar to the above description of encoding method embodiments. The decoding apparatus embodiments have similar beneficial effects as the encoding method embodiments. Technical details not disclosed in the decoding apparatus embodiments in the disclosure are understood with reference to the description of encoding method embodiments in the disclosure.

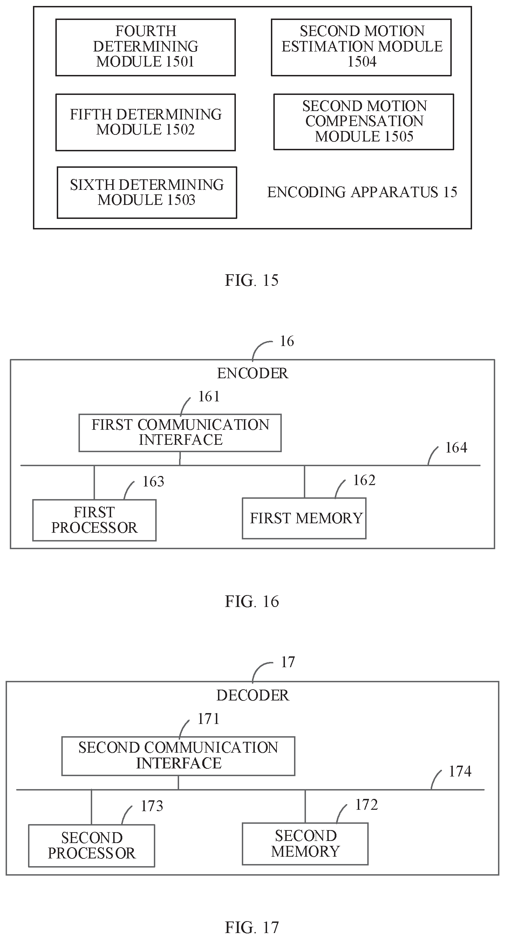

An encoding apparatus is provided in embodiments of the disclosure. The encoding apparatus is applied to an encoder. FIG. 15 is a schematic structural diagram of an encoding apparatus provided in embodiments of the disclosure. As illustrated in FIG. 15, the encoding apparatus 15 includes a fourth determining module 1501, a fifth determining module 1502, a sixth determining module 1503, a second motion estimation module 1504, and a second motion compensation module 1505. The fourth determining module 1501 is configured to determine a first difference in sample values between a first reference block pointed to by a first candidate MV of a current block and a second reference block pointed to by a second candidate MV of the current block. The fifth determining module 1502 is configured to determine a second difference in sample values between a template of the current block and a template of the first reference block. The sixth determining module 1503 is configured to determine a third difference in sample values between the template of the current block and a template of the second reference block. The second motion estimation module 1504 is configured to obtain a first prediction MV and a second prediction MV of the current block by performing motion estimation on the current block at least according to the first difference, the second difference, and the third difference. The second motion compensation module 1505 is configured to obtain a prediction block of the current block by performing motion compensation on the current block according to the first prediction MV and the second prediction MV.

In some embodiments, the encoding apparatus 15 further includes a seventh determining module and a generating module. The seventh determining module is configured to determine a residual block of the current block according to an original block of the current block and the prediction block of the current block. The generating module is configured to generate a bitstream according to the residual block of the current block.

It may be understood that, the decoding apparatus 14 and the encoding apparatus 15 use the same operations to obtain the prediction block of the current block. That is, the first determining module 1401 in the decoding apparatus 14 and the fourth determining module 1501 in the encoding apparatus 15 perform the same operations to determine the first difference, the second determining module 1402 in the decoding apparatus 14 and the fifth determining module 1502 in the encoding apparatus 15 perform the same operations to determine the second difference, the third determining module 1403 in the decoding apparatus 14 and the sixth determining module 1503 in the encoding apparatus 15 perform the same operations to determine the third difference, the first motion estimation module 1404 in the decoding apparatus 14 and the second motion compensation module 1505 in the encoding apparatus 15 perform the same operations to determine the prediction block of the current block. Therefore, in the encoding apparatus embodiments, the operations performed by the modules and related features above will not be described in detail, and the operations performed by the modules above are the same as those performed by corresponding modules in the decoding apparatus.

The above description of encoding apparatus embodiments is similar to the above description of encoding/decoding method embodiments. The encoding apparatus embodiments have similar beneficial effects as the encoding/decoding method embodiments. Technical details not disclosed in the encoding apparatus embodiments in the disclosure are understood with reference to the description of encoding/decoding method embodiments in the disclosure.

It may be noted that, the division of modules in the encoding/decoding apparatus described in embodiments of the disclosure is illustrative and is only a division of logical functions, and other manners of division may also available in practice. In addition, various functional units described in various embodiments of the disclosure may be integrated into one processing unit, may be physically present alone, or may have two or more units integrated into one unit. The above integrated units may be implemented either in the form of hardware or in the form of software functional units, or may be implemented by a combination of software and hardware.

It may be noted that in embodiments of the disclosure, if the above methods are implemented as software functional modules and sold or used as standalone products, the above methods may be stored in a computer-readable storage medium. Based on such understanding, the essential technical solution of embodiments of the disclosure, or the portion that contributes to the related art may be embodied as software products. The computer software products are stored in a storage medium and may include multiple instructions that, when executed, can cause an electronic device to perform all or part of the methods described in embodiments of the disclosure. The storage media may include various media that can store program codes, such as a universal serial bus (USB) flash disk, a mobile hard drive, a read-only memory (ROM), a magnetic disk, or an optical disk. Therefore, embodiments of the disclosure are not limited to combinations with any specific hardware or software.

A computer-readable storage medium is provided in embodiments of the disclosure. The computer-readable storage medium is configured to store a computer program which, when executed, is operable to implement the encoding method or the decoding method in embodiments of the disclosure.

An encoder is provided in embodiments of the disclosure. As illustrated in FIG. 16, the encoder 16 includes a first communication interface 161, a first memory 162, and a first processor 163. The components are coupled together via a first bus system 164. It may be understood that the first bus system 164 is configured to enable connection and communication between these components. The first bus system 164 includes a power bus, a control bus, and a status signal bus in addition to a data bus. For the sake of clarity, however, the various buses are labelled as the first bus system 164 in FIG. 16.

The first communication interface 161 is configured to receive and transmit signals during information transmission with other external network elements.

The first memory 162 is configured to store a computer program executable by the first processor 163.

The first processor 163 is configured to, when executing the computer program, perform the encoding method in embodiments of the disclosure.

It will be appreciated that the first memory 162 in embodiments of the disclosure may be a transitory memory or non-transitory memory, or may include both transitory and non-transitory memory. In particular, the non-transitory memory may be an ROM, a programmable ROM (PROM), an erasable PROM (EPROM), an electrically EPROM (EEPROM), or a flash memory. The transitory memory may be a random access memory (RAM), which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The first memory 162 of the system and method described in this disclosure is intended to include, but is not limited to, these and any other suitable types of memory.

The first processor 163 may be an integrated circuit chip with signal processing capabilities. During implementation, the operations in the above method may be accomplished by integrated logic circuitry in the hardware of the first processor 163 or by instructions in the form of software. The first processor 163 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 162, and the first processor 163 reads the information in the first memory 162 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP Device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 163 is further configured to perform any one of the encoding method embodiments when executing the computer program.

A decoder is provided in embodiments of the disclosure. As illustrated in FIG. 17, the decoder 170 includes a second communication interface 171, a second memory 172, and a second processor 173. The components are coupled together via a second bus system 174. It may be understood that the second bus system 174 is configured to enable connection and communication between these components. The second bus system 174 includes a power bus, a control bus, and a status signal bus in addition to a data bus. For the sake of clarity, however, the various buses are labelled as second bus system 174 in FIG. 17.

The second communication interface 171 is configured to receive and transmit signals during information transmission with other external network elements.

The second memory 172 is configured to store a computer program executable by the second processor 173.

The second processor 173 is configured to, when executing the computer program, perform the decoding method in embodiments of the disclosure.

It may be understood that, in terms of hardware function, the second memory 172 is similar to the first memory 162, and the second processor 173 is similar to the first processor 163, which will not be repeated herein.

A bitstream is further provided embodiments of the disclosure. The bitstream is obtained according to the above encoding method.

An electronic device is provided in embodiments of the disclosure. The electronic device includes a processor and a computer-readable storage medium. The processor is adapted to executing a computer program. The computer-readable storage medium is configured to store the computer program which, when executed by the processor, is operable to implement the encoding method and/or the decoding method in embodiments of the disclosure. The electronic device may be any type of device having video encoding and/or video decoding capabilities. For example, the electronic device may be a mobile phone, a pad, a laptop computer, a personal computer, a television, a projection device, or a monitoring device, etc.

It may be noted that, the above description of the storage medium and apparatus embodiments is similar to the above description of the method embodiments. The storage medium and apparatus embodiments have similar beneficial effects as the method embodiments. Technical details not disclosed in the storage medium and apparatus embodiments of the disclosure are understood with reference to the description of method embodiments in the disclosure.

It may be understood that, terms "embodiment" or "the embodiment" or "some embodiments" referred to herein mean that a particular feature, structure, or characteristic described in conjunction with the embodiment may be contained in at least one embodiment of the disclosure. Terms "in embodiment" or "in the embodiment" or "in some embodiments" appearing in various places in the specification do not necessarily refer to the same embodiment or implementation. The particular feature, structure, or characteristic described may be properly combined in any one or more embodiments. It may be understood that, in the above embodiments of the disclosure, a magnitude of a sequence number of each process does not mean an execution order, and the execution order of each process should be determined by its function and an internal logic and may not constitute any limitation to an implementation process of embodiments of the disclosure. The above sequence number of embodiments of the disclosure are for description only and do not represent the advantages and disadvantages of embodiments. The above description of the various embodiments tends to emphasize the differences between the various embodiments, mutual reference can be made to the same or similar part of the various embodiments and the same or similar part of the various embodiments, which will not be repeated herein for the sake of brevity.

The term "and/or" herein only describes an association relationship between associated objects, which means that there can be three relationships. For example, object A and/or object B can mean object A alone, both object A and object B exist, and object B alone.

It may be noted that, terms "include", "comprise" as well as variations thereof are intended to cover non-exclusive inclusion, so that a process, method, object, or device that includes a set of elements includes not only those elements, but also other elements that are not explicitly listed, or elements inherent to such a process, method, object, or device. In the absence of further limitations, an element defined by the phrase "includes a ..." does not preclude the existence of another identical element in the process, method, object or device in which it is included.

In several embodiments provided in the disclosure, it may be understood that the disclosed device and method may be implemented in other manners. The above embodiments are merely illustrative, for example, the division of modules is only a division of logical functions, and other manners of division may also available in practice, e.g., multiple modules or assemblies may be combined or may be integrated into another system, or some features may be ignored or skipped. In addition, the coupling or direct coupling or communication connection between various components as illustrated or discussed may be an indirect coupling or communication connection through some interface, device, or module, and may be electrical, mechanical, or otherwise.

Separated modules as illustrated may or may not be physically separated. Components displayed as modules may or may not be physical modules, and may reside at one location or may be distributed to multiple networked units. Part or all of the modules may be selected according to practical needs to achieve desired objectives of the disclosure.

In addition, various functional modules described in embodiments of the disclosure may be integrated into one processing unit or may be present as a number of physically separated units, and two or more modules may be integrated into one unit. The integrated module may be implemented either in the form of hardware or in the form of hardware and software functional units.

It may be understood by those of ordinary skills in the art that, all or part of the operations of the method embodiments may be implemented by means of hardware associated with program instructions, and the above program may be stored in a computer-readable storage medium. The program, when executed, is operable to perform the operations of the method embodiments. The above storage medium includes various media that can store program codes, such as a mobile storage device, an ROM, a magnetic disk, or an optical disk.

Alternatively, if the above integrated units of the disclosure are implemented as software functional modules and sold or used as standalone products, the above integrated units of the disclosure may be stored in a computer-readable storage medium. Based on such understanding, the essential technical solution of embodiments of the disclosure, or the portion that contributes to the related art may be embodied as software products. The computer software products are stored in a storage medium and may include multiple instructions that, when executed, can cause an electronic device to perform all or part of the methods described in embodiments of the disclosure. The storage media include various media that can store program codes, such as a mobile storage device, an ROM, a magnetic disk, or an optical disk.

The methods disclosed in several method embodiments provided in the disclosure may be combined with each other without conflict, to obtain a new method embodiment.

The features disclosed in several product embodiments provided in the disclosure may be combined with each other without conflict, to obtain a new product embodiment.

The features disclosed in several method or apparatus embodiments provided in the disclosure may be combined with each other without conflict, to obtain a new method or apparatus embodiment.

The above are merely embodiments of the disclosure and are not intended to limit the scope of protection of the disclosure. Any modification and replacement made by those skilled in the art within the technical scope of the disclosure shall be included in the scope of protection of the disclosure. Therefore, the scope of protection of the disclosure shall be subject to the scope of protection of the claims.

**Claims**

1. A decoding method, applied to a decoder and comprising:

determining a first difference in sample values between a first reference block pointed to by a first candidate motion vector (MV) of a current block and a second reference block pointed to by a second candidate MV of the current block;
determining a second difference in sample values between a template of the current block and a template of the first reference block;
determining a third difference in sample values between the template of the current block and a template of the second reference block;
obtaining a first prediction MV and a second prediction MV of the current block by performing motion estimation on the current block at least according to the first difference, the second difference, and the third difference; and

obtaining a prediction block of the current block by performing motion compensation on the current block according to the first prediction MV and the second prediction MV.

2. The method of claim 1, wherein obtaining the first prediction MV and the second prediction MV of the current block by performing motion estimation on the current block at least according to the first difference, the second difference, and the third difference comprises:

determining a first matching cost at least according to the first difference, the second difference, and the third difference, wherein the first matching cost represents a matching degree between each of the first reference block and the second reference block and the current block;
from the first candidate MV and the second candidate MV, performing a first search process to obtain a new first matching cost, wherein the first search process comprises: from the first candidate MV, with a first step length as a search step length, searching in a first direction to obtain a new first candidate MV; from the second candidate MV, with the first step length as the search step length, searching in a second direction to obtain a new second candidate MV; and determining the new first matching cost according to the new first candidate MV and the new second candidate MV, wherein the first direction is in a mirrored relationship with the second direction; and determining the first prediction MV and the second prediction MV at least according to the two first matching costs obtained.

3. The method of claim 2, wherein determining the first prediction MV and the second prediction MV at least according to the two first matching costs obtained comprises:
in response to a first search termination condition being satisfied, determining the first prediction MV and the second prediction MV according to the two first matching costs obtained.

4. The method of claim 2, wherein determining the first prediction MV and the second prediction MV at least according to the two first matching costs obtained comprises:
in response to a first search termination condition being not satisfied, iterating the first search process from the new first candidate MV and the new second candidate MV until the first search termination condition is satisfied, and determining the first prediction MV and the second prediction MV according to a plurality of first matching costs obtained.

5. The method of claim 3 or 4, wherein

the first prediction MV is equal to an MV corresponding to a minimum first matching cost among the first matching costs obtained; and
the second prediction MV is equal to the MV corresponding to the minimum first matching cost.

6. The method of claim 2, wherein determining the first matching cost at least according to the first difference, the second difference, and the third difference comprises:

determining a first weighting factor for the first difference, a second weighting factor for the second difference, and a third weighting factor for the third difference; and
obtaining the first matching cost by weighting the first difference, the second difference, and the third difference according to the first weighting factor, the second weighting factor, and the third weighting factor.

7. The method of claim 2, wherein determining the first matching cost at least according to the first difference, the second difference, and the third difference comprises:

determining a first motion vector difference (MVD) of the first candidate MV and a second MVD of the second candidate MV; and
determining the first matching cost according to the first difference, the second difference, the third difference, the first MVD, and the second MVD.

8. The method of claim 7, wherein determining the first matching cost according to the first difference, the second difference, the third difference, the first MVD, and the second MVD comprises:

determining a first weighting factor for the first difference, a second weighting factor for the second difference, a third weighting factor for the third difference, a fourth weighting factor for the first MVD, and a fifth weighting factor for the second MVD; and

obtaining the first matching cost by weighting the first difference, the second difference, the third difference, the first MVD, and the second MVD according to the first weighting factor, the second weighting factor, the third weighting factor, the fourth weighting factor, and the fifth weighting factor.

9. The method of claim 1, wherein obtaining the first prediction MV and the second prediction MV of the current block by performing motion estimation on the current block at least according to the first difference, the second difference, and the third difference comprises:

determining a second matching cost at least according to the first difference and the second difference, wherein the second matching cost represents a matching degree between the first reference block and the current block; from the first candidate MV, performing a second search process to obtain a new second matching cost, wherein the second search process comprises: from the first candidate MV, with a second step length as a search step length, searching in a first direction to obtain a new first candidate MV; and determining the new second matching cost according to the second candidate MV and the new first candidate MV; in response to a second search termination condition being not satisfied, iterating the second search process from the new first candidate MV until the second search termination condition is satisfied; and in response to the second search termination condition being satisfied, determining the first prediction MV and the second prediction MV at least according to a plurality of second matching costs obtained and the third difference.

10. The method of claim 9, wherein determining the first prediction MV and the second prediction MV at least according to the plurality of second matching costs obtained and the third difference comprises:

determining a first candidate MV corresponding to a minimum second matching cost among the plurality of second matching costs obtained as a third candidate MV; determining a fourth difference in sample values between a third reference block pointed to by the third candidate MV and the second reference block pointed to by the second candidate MV; determining a third matching cost at least according to the fourth difference and the third difference, wherein the third matching cost represents a matching degree between the second reference block and the current block; from the second candidate MV, performing a third search process to obtain a new third matching cost, wherein the third search process comprises: from the second candidate MV, with a third step length as the search step length, searching in a second direction to obtain a new second candidate MV; and determining the new third matching cost according to the third candidate MV and the new second candidate MV; in response to a third search termination condition being not satisfied, iterating the third search process from the new second candidate MV until the third search termination condition is satisfied; and in response to the third search termination condition being satisfied, determining the first prediction MV and the second prediction MV according to a plurality of third matching costs obtained and the third candidate MV.

11. The method of claim 10, wherein determining the first prediction MV and the second prediction MV according to the plurality of third matching costs obtained and the third candidate MV comprises:

determining the third candidate MV as the first prediction MV; and determining a second candidate MV corresponding to a minimum third matching cost among the plurality of third matching costs obtained as the second prediction MV.

12. The method of claim 10, wherein determining the second prediction MV according to the plurality of third matching costs obtained and the third candidate MV comprises: determining, based on a determination that a second matching cost corresponding to the third candidate MV is greater than a minimum third matching cost among the plurality of third matching costs obtained, a second candidate MV corresponding to the minimum third matching cost as the second prediction MV.

13. The method of claim 12, wherein determining the first prediction MV according to the plurality of third matching costs obtained and the third candidate MV comprises:

determining a fifth difference in sample values between the third reference block pointed to by the third candidate MV and a fourth reference block pointed to by the second prediction MV; obtaining a first modified template of the current block by modifying the template of the current block according to a template of the fourth reference block;

determining a sixth difference in sample values between a template of the third reference block and the first modified template;

determining a fourth matching cost at least according to the fifth difference and the sixth difference, wherein the fourth matching cost represents a matching degree between the third reference block and the current block;

from the third candidate MV, performing a fourth search process to obtain a new fourth matching cost, wherein the fourth search process comprises: from the third candidate MV, with a fourth step length as the search step length, searching in the first direction to obtain a new third candidate MV; and determining the new fourth matching cost according to the new third candidate MV and the second prediction MV; and

determining the first prediction MV at least according to the two fourth matching costs obtained.

14. The method of claim 13, wherein determining the first prediction MV at least according to the two fourth matching costs obtained comprises:

in response to a fourth search termination condition being satisfied, determining the first prediction MV according to the two fourth matching costs obtained.

15. The method of claim 13, wherein determining the first prediction MV at least according to the two fourth matching costs obtained comprises:

in response to a fourth search termination condition being not satisfied, iterating the fourth search process from the new third candidate MV until the fourth search termination condition is satisfied, and determining the first prediction MV according to a plurality of fourth matching costs obtained.

16. The method of claim 14 or 15, wherein
the first prediction MV is equal to a third candidate MV corresponding to a minimum fourth matching cost among the fourth matching costs obtained.

17. The method of claim 13, wherein
a sample value at each position of the first modified template is equal to twice a sample value at a corresponding position of the template of the current block minus a sample value at a corresponding position of the template of the fourth reference block.

18. The method of claim 9, wherein determining the second matching cost at least according to the first difference and the second difference comprises:

determining a first weighting factor for the first difference and a second weighting factor for the second difference; and

obtaining the second matching cost by weighting the first difference and the second difference according to the first weighting factor and the second weighting factor.

19. The method of claim 9, wherein determining the second matching cost at least according to the first difference and the second difference comprises:

determining a first MVD of the first candidate MV; and
determining the second matching cost according to the first difference, the second difference, and the first MVD.

20. The method of claim 19, wherein determining the second matching cost according to the first difference, the second difference, and the first MVD comprises:

determining a first weighting factor for the first difference, a second weighting factor for the second difference, and a fourth weighting factor for the first MVD; and

obtaining the second matching cost by weighting the first difference, the second difference, and the first MVD according to the first weighting factor, the second weighting factor, and the fourth weighting factor.

21. The method of claim 10, wherein determining the third matching cost at least according to the fourth difference and the third difference comprises:

determining a sixth weighting factor for the fourth difference and a third weighting factor for the third difference; and

obtaining the third matching cost by weighting the fourth difference and the third difference according to the sixth weighting factor and the third weighting factor.

22. The method of claim 10, wherein determining the third matching cost at least according to the fourth difference and the third difference comprises:

determining a second MVD of the second candidate MV; and
determining the third matching cost according to the fourth difference, the third difference, and the second MVD.

23. The method of claim 22, wherein determining the third matching cost according to the fourth difference, the third difference, and the second MVD comprises:

determining a sixth weighting factor for the fourth difference, a third weighting factor for the third difference, and a fifth weighting factor for the second MVD; and
obtaining the third matching cost by weighting the fourth difference, the third difference, and the second MVD according to the sixth weighting factor, the third weighting factor, and the fifth weighting factor.

24. The method of claim 13, wherein determining the fourth matching cost at least according to the fifth difference and the sixth difference comprises:

determining a third MVD of the third candidate MV; and
determining the fourth matching cost according to the fifth difference, the sixth difference, and the third MVD.

25. The method of claim 24, wherein determining the fourth matching cost according to the fifth difference, the sixth difference, and the third MVD comprises:

determining a seventh weighting factor for the fifth difference, an eighth weighting factor for the sixth difference, and a ninth weighting factor for the third MVD; and
obtaining the fourth matching cost by weighting the fifth difference, the sixth difference, and the third MVD according to the seventh weighting factor, the eighth weighting factor, and the ninth weighting factor.

26. The method of claim 1, wherein obtaining the first prediction MV and the second prediction MV of the current block by performing motion estimation on the current block at least according to the first difference, the second difference, and the third difference comprises:

in response to the second difference being greater than the third difference, determining a fifth matching cost at least according to the first difference and the second difference, wherein the fifth matching cost represents a matching degree between the first reference block and the current block;
from the first candidate MV, performing a fifth search process to obtain a new fifth matching cost, wherein the fifth search process comprises: from the first candidate MV, with a fifth step length as a search step length, searching in a first direction to obtain a new first candidate MV; and determining the new fifth matching cost according to the new first candidate MV and the second candidate MV;
determining the first prediction MV at least according to the two fifth matching costs obtained; and
determining the second prediction MV according to the first prediction MV and the third difference.

27. The method of claim 26, wherein determining the first prediction MV at least according to the two fifth matching costs obtained comprises:
in response to a fifth search termination condition being satisfied, determining the first prediction MV according to the two fifth matching costs obtained.

28. The method of claim 26, wherein determining the first prediction MV at least according to the two fifth matching costs obtained comprises:
in response to a fifth search termination condition being not satisfied, iterating the fifth search process until the fifth search termination condition is satisfied, and determining the first prediction MV according to a plurality of fifth matching costs obtained.

29. The method of claim 28, wherein
the first prediction MV is equal to a first candidate MV corresponding to a minimum fifth matching cost among the plurality of fifth matching costs obtained.

30. The method of claim 26, further comprising:

    determining a seventh difference in sample values between a template of a reference block pointed to by a first initial MV and the template of the current block;

    determining a sixth matching cost at least according to the seventh difference, wherein the sixth matching cost represents a matching degree between the reference block pointed to by the first initial MV and the current block; from the first initial MV, performing a sixth search process to obtain a new sixth matching cost, wherein the sixth search process comprises: from the first initial MV, with a sixth step length as the search step length, searching in the first direction to obtain a new first initial MV; and determining the new sixth matching cost according to the new first initial MV; and

    determining the first candidate MV at least according to the two sixth matching costs obtained.

31. The method of claim 30, wherein determining the first candidate MV at least according to the two sixth matching costs obtained comprises:

    in response to a sixth search termination condition being satisfied, determining the first candidate MV according to the two sixth matching costs obtained.

32. The method of claim 30, wherein determining the first candidate MV at least according to the two sixth matching costs obtained comprises:

    in response to a sixth search termination condition being not satisfied, iterating the sixth search process until the sixth search termination condition is satisfied, and determining the first candidate MV according to a plurality of sixth matching costs obtained.

33. The method of claim 31 or 32, wherein

    the first candidate MV is equal to a first initial MV corresponding to a minimum sixth matching cost among the sixth matching costs obtained.

34. The method of claim 26, wherein determining the second difference in the sample values between the template of the current block and the template of the first reference block comprises:

    obtaining a second modified template of the current block by modifying the template of the current block according to the template of the second reference block pointed to by the second candidate MV; and

    determining a second difference in sample values between the second modified template and the template of the first reference block.

35. The method of claim 34, wherein

    a sample value at each position of the second modified template is equal to twice a sample value at a corresponding position of the template of the current block minus a sample value at a corresponding position of the template of the second reference block.

36. The method of claim 26, wherein determining the second prediction MV according to the first prediction MV and the third difference comprises:

    determining an eighth difference in sample values between a fifth reference block pointed to by the first prediction MV and the second reference block pointed to by the second candidate MV;

    determining a seventh matching cost at least according to the eighth difference and the third difference, wherein the seventh matching cost represents a matching degree between the fifth reference block and the current block; from the second candidate MV, performing a seventh search process to obtain a new seventh matching cost, wherein the seventh search process comprises: from the second candidate MV, with a seventh step length as the search step length, searching in a second direction to obtain a new second candidate MV; and determining the new seventh matching cost according to the new second candidate MV and the first prediction MV; and

    determining the second prediction MV at least according to the two seventh matching costs obtained.

37. The method of claim 36, wherein determining the second prediction MV at least according to the two seventh matching costs obtained comprises:

    in response to a seventh search termination condition being satisfied, determining the second prediction MV according to the two seventh matching costs obtained.

**38.** The method of claim 36, wherein determining the second prediction MV at least according to the two seventh matching costs obtained comprises:

in response to a seventh search termination condition being not satisfied, iterating the seventh search process until the seventh search termination condition is satisfied, and determining the second prediction MV according to a plurality of seventh matching costs obtained.

**39.** The method of claim 37 or 38, wherein
the second prediction MV is equal to a second candidate MV corresponding to a minimum seventh matching cost among the seventh matching costs obtained.

**40.** The method of claim 36, wherein determining the third difference in the sample values between the template of the current block and the template of the second reference block comprises:

obtaining a third modified template of the current block by modifying the template of the current block according to a template of a reference block pointed to by the first prediction MV; and
determining a third difference in sample values between the third modified template and the template of the second reference block.

**41.** The method of claim 40, wherein obtaining the third modified template of the current block by modifying the template of the current block according to the template of the reference block pointed to by the first prediction MV comprises:
a sample value at each position of the third modified template is equal to twice a sample value at a corresponding position of the template of the current block minus a sample value at a corresponding position of the template of the reference block pointed to by the first prediction MV.

**42.** The method of claim 26, 34, or 35, wherein determining the fifth matching cost at least according to the first difference and the second difference comprises:

determining a first weighting factor for the first difference and a second weighting factor for the second difference; and
obtaining the fifth matching cost by weighting the first difference and the second difference according to the first weighting factor and the second weighting factor.

**43.** The method of claim 26, 34, or 35, wherein determining the fifth matching cost at least according to the first difference and the second difference comprises:

determining a first MVD of the first candidate MV; and
determining the fifth matching cost according to the first difference, the second difference, and the first MVD.

**44.** The method of claim 43, wherein determining the fifth matching cost according to the first difference, the second difference, and the first MVD comprises:

determining a first weighting factor for the first difference, a second weighting factor for the second difference, and a fourth weighting factor for the first MVD; and
obtaining the fifth matching cost by weighting the first difference, the second difference, and the first MVD according to the first weighting factor, the second weighting factor, and the fourth weighting factor.

**45.** The method of claim 30, wherein determining the sixth matching cost at least according to the seventh difference comprises:

determining a fourth MVD of the first initial MV; and
determining the sixth matching cost according to the seventh difference and the fourth MVD.

**46.** The method of claim 45, wherein determining the sixth matching cost according to the seventh difference and the fourth MVD comprises:

determining a tenth weighting factor for the seventh difference and an eleventh weighting factor for the fourth MVD; and
obtaining the sixth matching cost by weighting the seventh difference and the fourth MVD according to the tenth weighting factor and the eleventh weighting factor.

47. The method of claim 36, 40, or 41, wherein determining the seventh matching cost at least according to the eighth difference and the third difference comprises:

determining a twelfth weighting factor for the eighth difference and a third weighting factor for the third difference; and
obtaining the seventh matching cost by weighting the eighth difference and the third difference according to the twelfth weighting factor and the third weighting factor.

48. The method of claim 36, 40, or 41, wherein determining the seventh matching cost at least according to the eighth difference and the third difference comprises:

determining a second MVD of the second candidate MV; and
determining the seventh matching cost according to the eighth difference, the third difference, and the second MVD.

49. The method of claim 48, wherein determining the seventh matching cost according to the eighth difference, the third difference, and the second MVD comprises:

determining a twelfth weighting factor for the eighth difference, a third weighting factor for the third difference, and a fifth weighting factor for the second MVD; and
obtaining the seventh matching cost by weighting the eighth difference, the third difference, and the second MVD according to the twelfth weighting factor, the third weighting factor, and the fifth weighting factor.

50. The method of claim 6, 8, 18, 20, 21, 23, 25, 42, 44, 46, 47, or 49, wherein
the first weighting factor to the twelfth weighting factor are all preset values.

51. The method of claim 6, 8, 18, 20, 21, 23, 25, 42, 44, 46, 47, or 49, further comprising:
determining the first weighting factor, the sixth weighting factor, the seventh weighting factor, and the twelfth weighting factor according to a size of the current block or a size of the template of the current block.

52. The method of claim 51, wherein

the first weighting factor is equal to a number of samples in the template of the current block;
the sixth weighting factor is equal to the number of samples in the template of the current block;
the seventh weighting factor is equal to the number of samples in the template of the current block; and
the twelfth weighting factor is equal to the number of samples in the template of the current block.

53. The method of claim 6, 8, 18, 20, 21, 23, 25, 42, 44, 46, 47, or 49, further comprising:
determining the second weighting factor, the third weighting factor, the eighth weighting factor, and the ninth weighting factor according to a size of the current block or a size of the template of the current block.

54. The method of claim 53, wherein

the second weighting factor is equal to a number of samples of the current block;
the third weighting factor is equal to the number of samples of the current block;
the eighth weighting factor is equal to the number of samples of the current block; and
the tenth weighting factor is equal to the number of samples of the current block.

55. The method of claim 8, 20, 23, 25, 46, or 49, further comprising:
determining the fourth weighting factor, the fifth weighting factor, the ninth weighting factor, and the eleventh weighting factor according to a size of the current block or a size of the template of the current block.

56. The method of any one of claims 1 to 55, wherein
a distance between a first reference picture to which the first reference block belongs and a current picture to which the current block belongs is equal to or unequal to a distance between a second reference picture to which the second reference block belongs and the current picture to which the current block belongs.

57. The method of any one of claims 1 to 55, wherein

determine, according to a relationship between the first candidate MV and the second candidate MV, whether to proceed to obtaining the first prediction MV and the second prediction MV of the current block by performing motion estimation on the current block at least according to the first difference, the second difference, and the third difference.

58. The method of claim 57, wherein

in response to the first candidate MV and the second candidate MV being asymmetric, proceed to obtaining the first prediction MV and the second prediction MV of the current block by performing motion estimation on the current block at least according to the first difference, the second difference, and the third difference.

59. The method of claim 58, wherein

in response to a ratio or difference between an absolute value of the first candidate MV and an absolute value of the second candidate MV being not within a corresponding range and/or a ratio or difference between an angle of the first candidate MV and an angle of the second candidate MV being not within the corresponding range, determine that the first candidate MV and the second candidate MV are asymmetric.

60. The method of any one of claims 1 to 55, further comprising:

parsing a bitstream to obtain a residual block of the current block; and
determining a reconstructed block of the current block according to the prediction block and the residual block of the current block.

61. An encoding method, applied to an encoder and comprising:

determining a first difference in sample values between a first reference block pointed to by a first candidate motion vector (MV) of a current block and a second reference block pointed to by a second candidate MV of the current block;
determining a second difference in sample values between a template of the current block and a template of the first reference block;
determining a third difference in sample values between the template of the current block and a template of the second reference block;
obtaining a first prediction MV and a second prediction MV of the current block by performing motion estimation on the current block at least according to the first difference, the second difference, and the third difference; and
obtaining a prediction block of the current block by performing motion compensation on the current block according to the first prediction MV and the second prediction MV.

62. The method of claim 61, wherein obtaining the first prediction MV and the second prediction MV of the current block by performing motion estimation on the current block at least according to the first difference, the second difference, and the third difference comprises:

determining a first matching cost at least according to the first difference, the second difference, and the third difference, wherein the first matching cost represents a matching degree between each of the first reference block and the second reference block and the current block;
from the first candidate MV and the second candidate MV, performing a first search process to obtain a new first matching cost, wherein the first search process comprises: from the first candidate MV, with a first step length as a search step length, searching in a first direction to obtain a new first candidate MV; from the second candidate MV, with the first step length as the search step length, searching in a second direction to obtain a new second candidate MV; and determining the new first matching cost according to the new first candidate MV and the new second candidate MV, wherein the first direction is in a mirrored relationship with the second direction; and
determining the first prediction MV and the second prediction MV at least according to the two first matching costs obtained.

63. The method of claim 62, wherein determining the first prediction MV and the second prediction MV at least according to the two first matching costs obtained comprises:

in response to a first search termination condition being satisfied, determining the first prediction MV and the second prediction MV according to the two first matching costs obtained.

64. The method of claim 62, wherein determining the first prediction MV and the second prediction MV at least according to the two first matching costs obtained comprises:

in response to a first search termination condition being not satisfied, iterating the first search process from the new first candidate MV and the new second candidate MV until the first search termination condition is satisfied, and determining the first prediction MV and the second prediction MV according to a plurality of first matching costs obtained.

65. The method of claim 63 or 64, wherein

the first prediction MV is equal to an MV corresponding to a minimum first matching cost among the first matching costs obtained; and
the second prediction MV is equal to the MV corresponding to the minimum first matching cost.

66. The method of claim 62, wherein determining the first matching cost at least according to the first difference, the second difference, and the third difference comprises:

determining a first weighting factor for the first difference, a second weighting factor for the second difference, and a third weighting factor for the third difference; and
obtaining the first matching cost by weighting the first difference, the second difference, and the third difference according to the first weighting factor, the second weighting factor, and the third weighting factor.

67. The method of claim 62, wherein determining the first matching cost at least according to the first difference, the second difference, and the third difference comprises:

determining a first motion vector difference (MVD) of the first candidate MV and a second MVD of the second candidate MV; and
determining the first matching cost according to the first difference, the second difference, the third difference, the first MVD, and the second MVD.

68. The method of claim 67, wherein determining the first matching cost according to the first difference, the second difference, the third difference, the first MVD, and the second MVD comprises:

determining a first weighting factor for the first difference, a second weighting factor for the second difference, a third weighting factor for the third difference, a fourth weighting factor for the first MVD, and a fifth weighting factor for the second MVD; and
obtaining the first matching cost by weighting the first difference, the second difference, the third difference, the first MVD, and the second MVD according to the first weighting factor, the second weighting factor, the third weighting factor, the fourth weighting factor, and the fifth weighting factor.

69. The method of claim 61, wherein obtaining the first prediction MV and the second prediction MV of the current block by performing motion estimation on the current block at least according to the first difference, the second difference, and the third difference comprises:

determining a second matching cost at least according to the first difference and the second difference, wherein the second matching cost represents a matching degree between the first reference block and the current block;
from the first candidate MV, performing a second search process to obtain a new second matching cost, wherein the second search process comprises: from the first candidate MV, with a second step length as a search step length, searching in a first direction to obtain a new first candidate MV; and determining the new second matching cost according to the second candidate MV and the new first candidate MV;
in response to a second search termination condition being not satisfied, iterating the second search process from the new first candidate MV until the second search termination condition is satisfied; and
in response to the second search termination condition being satisfied, determining the first prediction MV and the second prediction MV at least according to a plurality of second matching costs obtained and the third difference.

70. The method of claim 69, wherein determining the first prediction MV and the second prediction MV at least according to the plurality of second matching costs obtained and the third difference comprises:

determining a first candidate MV corresponding to a minimum second matching cost among the plurality of second matching costs obtained as a third candidate MV;

determining a fourth difference in sample values between a third reference block pointed to by the third candidate MV and the second reference block pointed to by the second candidate MV;

determining a third matching cost at least according to the fourth difference and the third difference, wherein the third matching cost represents a matching degree between the second reference block and the current block;

from the second candidate MV, performing a third search process to obtain a new third matching cost, wherein the third search process comprises: from the second candidate MV, with a third step length as the search step length, searching in a second direction to obtain a new second candidate MV; and determining the new third matching cost according to the third candidate MV and the new second candidate MV;

in response to a third search termination condition being not satisfied, iterating the third search process from the new second candidate MV until the third search termination condition is satisfied; and

in response to the third search termination condition being satisfied, determining the first prediction MV and the second prediction MV according to a plurality of third matching costs obtained and the third candidate MV.

71. The method of claim 70, wherein determining the first prediction MV and the second prediction MV according to the plurality of third matching costs obtained and the third candidate MV comprises:

determining the third candidate MV as the first prediction MV; and

determining a second candidate MV corresponding to a minimum third matching cost among the plurality of third matching costs obtained as the second prediction MV.

72. The method of claim 70, wherein determining the second prediction MV according to the plurality of third matching costs obtained and the third candidate MV comprises:

determining, based on a determination that a second matching cost corresponding to the third candidate MV is greater than a minimum third matching cost among the plurality of third matching costs obtained, a second candidate MV corresponding to the minimum third matching cost as the second prediction MV.

73. The method of claim 72, wherein determining the first prediction MV according to the plurality of third matching costs obtained and the third candidate MV comprises:

determining a fifth difference in sample values between the third reference block pointed to by the third candidate MV and a fourth reference block pointed to by the second prediction MV;

obtaining a first modified template of the current block by modifying the template of the current block according to a template of the fourth reference block;

determining a sixth difference in sample values between a template of the third reference block and the first modified template;

determining a fourth matching cost at least according to the fifth difference and the sixth difference, wherein the fourth matching cost represents a matching degree between the third reference block and the current block;

from the third candidate MV, performing a fourth search process to obtain a new fourth matching cost, wherein the fourth search process comprises: from the third candidate MV, with a fourth step length as the search step length, searching in the first direction to obtain a new third candidate MV; and determining the new fourth matching cost according to the new third candidate MV and the second prediction MV; and

determining the first prediction MV at least according to the two fourth matching costs obtained.

74. The method of claim 73, wherein determining the first prediction MV at least according to the two fourth matching costs obtained comprises:

in response to a fourth search termination condition being satisfied, determining the first prediction MV according to the two fourth matching costs obtained.

75. The method of claim 73, wherein determining the first prediction MV at least according to the two fourth matching costs obtained comprises:

in response to a fourth search termination condition being not satisfied, iterating the fourth search process from the new third candidate MV until the fourth search termination condition is satisfied, and determining the first prediction MV according to a plurality of fourth matching costs obtained.

76. The method of claim 74 or 75, wherein

the first prediction MV is equal to a third candidate MV corresponding to a minimum fourth matching cost among the fourth matching costs obtained.

77. The method of claim 73, wherein
a sample value at each position of the first modified template is equal to twice a sample value at a corresponding position of the template of the current block minus a sample value at a corresponding position of the template of the fourth reference block.

78. The method of claim 69, wherein determining the second matching cost at least according to the first difference and the second difference comprises:

determining a first weighting factor for the first difference and a second weighting factor for the second difference; and
obtaining the second matching cost by weighting the first difference and the second difference according to the first weighting factor and the second weighting factor.

79. The method of claim 69, wherein determining the second matching cost at least according to the first difference and the second difference comprises:

determining a first MVD of the first candidate MV; and
determining the second matching cost according to the first difference, the second difference, and the first MVD.

80. The method of claim 79, wherein determining the second matching cost according to the first difference, the second difference, and the first MVD comprises:

determining a first weighting factor for the first difference, a second weighting factor for the second difference, and a fourth weighting factor for the first MVD; and
obtaining the second matching cost by weighting the first difference, the second difference, and the first MVD according to the first weighting factor, the second weighting factor, and the fourth weighting factor.

81. The method of claim 70, wherein determining the third matching cost at least according to the fourth difference and the third difference comprises:

determining a sixth weighting factor for the fourth difference and a third weighting factor for the third difference; and
obtaining the third matching cost by weighting the fourth difference and the third difference according to the sixth weighting factor and the third weighting factor.

82. The method of claim 70, wherein determining the third matching cost at least according to the fourth difference and the third difference comprises:

determining a second MVD of the second candidate MV; and
determining the third matching cost according to the fourth difference, the third difference, and the second MVD.

83. The method of claim 82, wherein determining the third matching cost according to the fourth difference, the third difference, and the second MVD comprises:

determining a sixth weighting factor for the fourth difference, a third weighting factor for the third difference, and a fifth weighting factor for the second MVD; and
obtaining the third matching cost by weighting the fourth difference, the third difference, and the second MVD according to the sixth weighting factor, the third weighting factor, and the fifth weighting factor.

84. The method of claim 73, wherein determining the fourth matching cost at least according to the fifth difference and the sixth difference comprises:

determining a third MVD of the third candidate MV; and
determining the fourth matching cost according to the fifth difference, the sixth difference, and the third MVD.

85. The method of claim 84, wherein determining the fourth matching cost according to the fifth difference, the sixth difference, and the third MVD comprises:

determining a seventh weighting factor for the fifth difference, an eighth weighting factor for the sixth difference, and a ninth weighting factor for the third MVD; and

obtaining the fourth matching cost by weighting the fifth difference, the sixth difference, and the third MVD according to the seventh weighting factor, the eighth weighting factor, and the ninth weighting factor.

86. The method of claim 61, wherein obtaining the first prediction MV and the second prediction MV of the current block by performing motion estimation on the current block at least according to the first difference, the second difference, and the third difference comprises:

in response to the second difference being greater than the third difference, determining a fifth matching cost at least according to the first difference and the second difference, wherein the fifth matching cost represents a matching degree between the first reference block and the current block;
from the first candidate MV, performing a fifth search process to obtain a new fifth matching cost, wherein the fifth search process comprises: from the first candidate MV, with a fifth step length as a search step length, searching in a first direction to obtain a new first candidate MV; and determining the new fifth matching cost according to the new first candidate MV and the second candidate MV;
determining the first prediction MV at least according to the two fifth matching costs obtained; and
determining the second prediction MV according to the first prediction MV and the third difference.

87. The method of claim 86, wherein determining the first prediction MV at least according to the two fifth matching costs obtained comprises:
in response to a fifth search termination condition being satisfied, determining the first prediction MV according to the two fifth matching costs obtained.

88. The method of claim 86, wherein determining the first prediction MV at least according to the two fifth matching costs obtained comprises:
in response to a fifth search termination condition being not satisfied, iterating the fifth search process until the fifth search termination condition is satisfied, and determining the first prediction MV according to a plurality of fifth matching costs obtained.

89. The method of claim 88, wherein
the first prediction MV is equal to a first candidate MV corresponding to a minimum fifth matching cost among the plurality of fifth matching costs obtained.

90. The method of claim 86, further comprising:

determining a seventh difference in sample values between a template of a reference block pointed to by a first initial MV and the template of the current block;
determining a sixth matching cost at least according to the seventh difference, wherein the sixth matching cost represents a matching degree between the reference block pointed to by the first initial MV and the current block;
from the first initial MV, performing a sixth search process to obtain a new sixth matching cost, wherein the sixth search process comprises: from the first initial MV, with a sixth step length as the search step length, searching in the first direction to obtain a new first initial MV; and determining the new sixth matching cost according to the new first initial MV; and
determining the first candidate MV at least according to the two sixth matching costs obtained.

91. The method of claim 90, wherein determining the first candidate MV at least according to the two sixth matching costs obtained comprises:
in response to a sixth search termination condition being satisfied, determining the first candidate MV according to the two sixth matching costs obtained.

92. The method of claim 90, wherein determining the first candidate MV at least according to the two sixth matching costs obtained comprises:
in response to a sixth search termination condition being not satisfied, iterating the sixth search process until the sixth search termination condition is satisfied, and determining the first candidate MV according to a plurality of sixth matching costs obtained.

93. The method of claim 91 or 92, wherein

the first candidate MV is equal to a first initial MV corresponding to a minimum sixth matching cost among the sixth matching costs obtained.

94. The method of claim 86, wherein determining the second difference in the sample values between the template of the current block and the template of the first reference block comprises:

obtaining a second modified template of the current block by modifying the template of the current block according to the template of the second reference block pointed to by the second candidate MV; and
determining a second difference in sample values between the second modified template and the template of the first reference block.

95. The method of claim 94, wherein
a sample value at each position of the second modified template is equal to twice a sample value at a corresponding position of the template of the current block minus a sample value at a corresponding position of the template of the second reference block.

96. The method of claim 86, wherein determining the second prediction MV according to the first prediction MV and the third difference comprises:

determining an eighth difference in sample values between a fifth reference block pointed to by the first prediction MV and the second reference block pointed to by the second candidate MV;
determining a seventh matching cost at least according to the eighth difference and the third difference, wherein the seventh matching cost represents a matching degree between the fifth reference block and the current block;
from the second candidate MV, performing a seventh search process to obtain a new seventh matching cost, wherein the seventh search process comprises: from the second candidate MV, with a seventh step length as the search step length, searching in a second direction to obtain a new second candidate MV; and determining the new seventh matching cost according to the new second candidate MV and the first prediction MV; and
determining the second prediction MV at least according to the two seventh matching costs obtained.

97. The method of claim 96, wherein determining the second prediction MV at least according to the two seventh matching costs obtained comprises:
in response to a seventh search termination condition being satisfied, determining the second prediction MV according to the two seventh matching costs obtained.

98. The method of claim 96, wherein determining the second prediction MV at least according to the two seventh matching costs obtained comprises:
in response to a seventh search termination condition being not satisfied, iterating the seventh search process until the seventh search termination condition is satisfied, and determining the second prediction MV according to a plurality of seventh matching costs obtained.

99. The method of claim 97 or 98, wherein
the second prediction MV is equal to a second candidate MV corresponding to a minimum seventh matching cost among the seventh matching costs obtained.

100.
The method of claim 96, wherein determining the third difference in the sample values between the template of the current block and the template of the second reference block comprises:

obtaining a third modified template of the current block by modifying the template of the current block according to a template of a reference block pointed to by the first prediction MV;
and
determining a third difference in sample values between the third modified template and the template of the second reference block.

101.
The method of claim 100, wherein obtaining the third modified template of the current block by modifying the template of the current block according to the template of the reference block pointed to by the first prediction MV comprises:
a sample value at each position of the third modified template is equal to twice a sample value at a corresponding position of the template of the current block minus a sample value at a corresponding position of the template of the reference block pointed to by the first prediction MV.

**102.**

The method of claim 86, 94, or 95, wherein determining the fifth matching cost at least according to the first difference and the second difference comprises:

> determining a first weighting factor for the first difference and a second weighting factor for the second difference; and
> obtaining the fifth matching cost by weighting the first difference and the second difference according to the first weighting factor and the second weighting factor.

**103.**

The method of claim 86, 94, or 95, wherein determining the fifth matching cost at least according to the first difference and the second difference comprises:

> determining a first MVD of the first candidate MV; and
> determining the fifth matching cost according to the first difference, the second difference, and the first MVD.

**104.**

The method of claim 103, wherein determining the fifth matching cost according to the first difference, the second difference, and the first MVD comprises:

> determining a first weighting factor for the first difference, a second weighting factor for the second difference, and a fourth weighting factor for the first MVD; and
> obtaining the fifth matching cost by weighting the first difference, the second difference, and the first MVD according to the first weighting factor, the second weighting factor, and the fourth weighting factor.

**105.**

The method of claim 90, wherein determining the sixth matching cost at least according to the seventh difference comprises:

> determining a fourth MVD of the first initial MV; and
> determining the sixth matching cost according to the seventh difference and the fourth MVD.

**106.**

The method of claim 105, wherein determining the sixth matching cost according to the seventh difference and the fourth MVD comprises:

> determining a tenth weighting factor for the seventh difference and an eleventh weighting factor for the fourth MVD; and
> obtaining the sixth matching cost by weighting the seventh difference and the fourth MVD according to the tenth weighting factor and the eleventh weighting factor.

**107.**

The method of claim 96, 100, or 101, wherein determining the seventh matching cost at least according to the eighth difference and the third difference comprises:

> determining a twelfth weighting factor for the eighth difference and a third weighting factor for the third difference; and
> obtaining the seventh matching cost by weighting the eighth difference and the third difference according to the twelfth weighting factor and the third weighting factor.

**108.**

The method of claim 96, 100, or 101, wherein determining the seventh matching cost at least according to the eighth difference and the third difference comprises:

> determining a second MVD of the second candidate MV; and

determining the seventh matching cost according to the eighth difference, the third difference, and the second MVD.

**109.**

The method of claim 108, wherein determining the seventh matching cost according to the eighth difference, the third difference, and the second MVD comprises:

determining a twelfth weighting factor for the eighth difference, a third weighting factor for the third difference, and a fifth weighting factor for the second MVD; and
obtaining the seventh matching cost by weighting the eighth difference, the third difference, and the second MVD according to the twelfth weighting factor, the third weighting factor, and the fifth weighting factor.

**110.**

The method of claim 66, 68, 78, 80, 81, 83, 85, 102, 104, 106, 107, or 109, wherein the first weighting factor to the twelfth weighting factor are all preset values.

**111.** The method of claim 66, 68, 78, 80, 81, 83, 85, 102, 104, 106, 107, or 109, further comprising:
determining the first weighting factor, the sixth weighting factor, the seventh weighting factor, and the twelfth weighting factor according to a size of the current block or a size of the template of the current block.

**112.**

The method of claim 111, wherein

the first weighting factor is equal to a number of samples in the template of the current block;
the sixth weighting factor is equal to the number of samples in the template of the current block;
the seventh weighting factor is equal to the number of samples in the template of the current block; and
the twelfth weighting factor is equal to the number of samples in the template of the current block.

**113.**

The method of claim 66, 68, 78, 80, 81, 83, 85, 102, 104, 106, 107, or 109, further comprising:
determining the second weighting factor, the third weighting factor, the eighth weighting factor, and the ninth weighting factor according to a size of the current block or a size of the template of the current block.

**114.**

The method of claim 113, wherein

the second weighting factor is equal to a number of samples of the current block;
the third weighting factor is equal to the number of samples of the current block;
the eighth weighting factor is equal to the number of samples of the current block; and the tenth weighting factor is equal to the number of samples of the current block.

**115.**

The method of claim 68, 80, 83, 85, 106, or 109, further comprising:
determining the fourth weighting factor, the fifth weighting factor, the ninth weighting factor, and the eleventh weighting factor according to a size of the current block or a size of the template of the current block.

**116.**

The method of any one of claims 61 to 115, wherein
a distance between a first reference picture to which the first reference block belongs and a current picture to which the current block belongs is equal to or unequal to a distance between a second reference picture to which the second reference block belongs and the current picture to which the current block belongs.

**117.**

The method of any one of claims 61 to 115, wherein
determine, according to a relationship between the first candidate MV and the second candidate MV, whether to proceed to obtaining the first prediction MV and the second prediction MV of the current block by performing motion estimation on the current block at least according to the first difference, the second difference, and the third difference.

**118.**

The method of claim 117, wherein

in response to the first candidate MV and the second candidate MV being asymmetric, proceed to obtaining the first prediction MV and the second prediction MV of the current block by performing motion estimation on the current block at least according to the first difference, the second difference, and the third difference.

**119.**

The method of claim 118, wherein

in response to a ratio or difference between an absolute value of the first candidate MV and an absolute value of the second candidate MV being not within a corresponding range and/or a ratio or difference between an angle of the first candidate MV and an angle of the second candidate MV being not within the corresponding range, determine that the first candidate MV and the second candidate MV are asymmetric.

**120.**

The method of any one of claims 61 to 115, further comprising:

> determining a residual block of the current block according to an original block of the current block and the prediction block of the current block; and
> generating a bitstream according to the residual block of the current block.

**121.**

A decoding apparatus, applied to a decoder and comprising:

> a first determining module configured to determine a first difference in sample values between a first reference block pointed to by a first candidate motion vector (MV) of a current block and a second reference block pointed to by a second candidate MV of the current block;
> a second determining module configured to determine a second difference in sample values between a template of the current block and a template of the first reference block;
> a third determining module configured to determine a third difference in sample values between the template of the current block and a template of the second reference block;
> a first motion estimation module configured to obtain a first prediction MV and a second prediction MV of the current block by performing motion estimation on the current block at least according to the first difference, the second difference, and the third difference; and
> a first motion compensation module configured to obtain a prediction block of the current block by performing motion compensation on the current block according to the first prediction MV and the second prediction MV.

**122.**

A decoder, comprising a first memory and a first processor, wherein:

> the first memory is configured to store a computer program executable by the first processor; and
> the first processor is configured to perform the method of any one of claims 1 to 60 when executing the computer program.

**123.**

An encoding apparatus, applied to an encoder and comprising:

> a fourth determining module configured to determine a first difference in sample values between a first reference block pointed to by a first candidate motion vector (MV) of a current block and a second reference block pointed to by a second candidate MV of the current block;
> a fifth determining module configured to determine a second difference in sample values between a template of the current block and a template of the first reference block;
> a sixth determining module configured to determine a third difference in sample values between the template of the current block and a template of the second reference block;
> a second motion estimation module configured to obtain a first prediction MV and a second prediction MV of the current block by performing motion estimation on the current block at least according to the first difference, the second difference, and the third difference; and
> a second motion compensation module configured to obtain a prediction block of the current block by performing motion compensation on the current block according to the first prediction MV and the second prediction MV.

**124.**

An encoder, comprising a second memory and a second processor, wherein:

the second memory is configured to store a computer program executable by the second processor; and
the second processor is configured to perform the method of any one of claims 61 to 120 when executing the computer program.

**125.**

A bitstream obtained according to the encoding method of any one of claims 61 to 120.

**126.**

An electronic device, comprising:

a processor adapted to executing a computer program; and
a computer-readable storage medium storing the computer program which, when executed by the processor, is operable to implement the method of any one of claims 1 to 60, or when executed by the processor, is operable to implement the method of any one of claims 61 to 120.

**127.**

A computer-readable storage medium storing a computer program which, when executed, is operable to implement the method of any one of claims 1 to 60, or when executed, is operable to implement the method of any one of claims 61 to 120.

FIG. 1

| | | | | | | | | | |
|---|---|---|---|---|---|---|---|---|---|
| POC | 0 | 1 | 2 | 3 | 4 | 5 | 6 | 7 | 8 |
| Decode Order | 0 | 3 | 2 | 4 | 1 | 7 | 6 | 8 | 5 |

FIG. 2

FIG. 3

FIG. 4

col_ref    cuff_ref    cuff_pic    col_pic

tb

td

FIG. 5

L0 reference                          L1 reference

FIG. 6

FIG. 7

FIG. 8

DETERMINE FIRST DIFFERENCE IN SAMPLE VALUES BETWEEN FIRST REFERENCE BLOCK POINTED TO BY FIRST CANDIDATE MV OF CURRENT BLOCK AND SECOND REFERENCE BLOCK POINTED TO BY SECOND CANDIDATE MV OF CURRENT BLOCK — 901

DETERMINE SECOND DIFFERENCE IN SAMPLE VALUES BETWEEN TEMPLATE OF CURRENT BLOCK AND TEMPLATE OF FIRST REFERENCE BLOCK — 902

DETERMINE THIRD DIFFERENCE IN SAMPLE VALUES BETWEEN TEMPLATE OF CURRENT BLOCK AND TEMPLATE OF SECOND REFERENCE BLOCK — 903

OBTAIN FIRST PREDICTION MV AND SECOND PREDICTION MV OF CURRENT BLOCK BY PERFORMING MOTION ESTIMATION ON CURRENT BLOCK AT LEAST ACCORDING TO FIRST DIFFERENCE, SECOND DIFFERENCE, AND THIRD DIFFERENCE — 904

OBTAIN PREDICTION BLOCK OF CURRENT BLOCK BY PERFORMING MOTION COMPENSATION ON CURRENT BLOCK ACCORDING TO FIRST PREDICTION MV AND SECOND PREDICTION MV — 905

FIG. 9

DETERMINE FIRST MATCHING COST AT LEAST ACCORDING TO FIRST DIFFERENCE, SECOND DIFFERENCE, AND THIRD DIFFERENCE, WHERE FIRST MATCHING COST REPRESENTS MATCHING DEGREE BETWEEN EACH OF FIRST REFERENCE BLOCK AND SECOND REFERENCE BLOCK AND CURRENT BLOCK — 1001

FROM FIRST CANDIDATE MV AND SECOND CANDIDATE MV, PERFORM FIRST SEARCH PROCESS TO OBTAIN NEW FIRST MATCHING COST — 1002

DETERMINE FIRST PREDICTION MV AND SECOND PREDICTION MV AT LEAST ACCORDING TO TWO FIRST MATCHING COSTS OBTAINED — 1003

FIG. 10

DETERMINE SECOND MATCHING COST AT LEAST ACCORDING TO FIRST DIFFERENCE AND SECOND DIFFERENCE, WHERE SECOND MATCHING COST REPRESENTS MATCHING DEGREE BETWEEN FIRST REFERENCE BLOCK AND CURRENT BLOCK — 1101

FROM FIRST CANDIDATE MV, PERFORM SECOND SEARCH PROCESS TO OBTAIN NEW SECOND MATCHING COST — 1102

FROM NEW FIRST CANDIDATE MV

DETERMINE WHETHER SECOND SEARCH TERMINATION CONDITION IS SATISFIED — 1103

NO

YES

DETERMINE FIRST PREDICTION MV AND SECOND PREDICTION MV AT LEAST ACCORDING TO MULTIPLE SECOND MATCHING COSTS OBTAINED AND THIRD DIFFERENCE — 1104

FIG. 11

WHEN FIRST CANDIDATE MV IS GREATER THAN SECOND CANDIDATE MV, DETERMINE FIFTH MATCHING COST AT LEAST ACCORDING TO FIRST DIFFERENCE AND SECOND DIFFERENCE, WHERE FIFTH MATCHING COST REPRESENTS MATCHING DEGREE BETWEEN FIRST REFERENCE BLOCK AND CURRENT BLOCK — 1201

FROM FIRST CANDIDATE MV, PERFORM FIFTH SEARCH PROCESS TO OBTAIN NEW FIFTH MATCHING COST — 1202

DETERMINE FIRST PREDICTION MV AT LEAST ACCORDING TO TWO FIFTH MATCHING COSTS OBTAINED — 1203

FIG. 12

DETERMINE FIRST DIFFERENCE IN SAMPLE VALUES BETWEEN FIRST REFERENCE BLOCK POINTED TO BY FIRST CANDIDATE MV OF CURRENT BLOCK AND SECOND REFERENCE BLOCK POINTED TO BY SECOND CANDIDATE MV OF CURRENT BLOCK — 1301

DETERMINE SECOND DIFFERENCE IN SAMPLE VALUES BETWEEN TEMPLATE OF CURRENT BLOCK AND TEMPLATE OF FIRST REFERENCE BLOCK — 1302

DETERMINE THIRD DIFFERENCE IN SAMPLE VALUES BETWEEN TEMPLATE OF CURRENT BLOCK AND TEMPLATE OF SECOND REFERENCE BLOCK — 1303

OBTAIN FIRST PREDICTION MV AND SECOND PREDICTION MV OF CURRENT BLOCK BY PERFORMING MOTION ESTIMATION ON CURRENT BLOCK AT LEAST ACCORDING TO FIRST DIFFERENCE, SECOND DIFFERENCE, AND THIRD DIFFERENCE — 1304

OBTAIN PREDICTION BLOCK OF CURRENT BLOCK BY PERFORMING MOTION COMPENSATION ON CURRENT BLOCK ACCORDING TO FIRST PREDICTION MV AND SECOND PREDICTION MV — 1305

FIG. 13

FIRST DETERMINING MODULE 1401

FIRST MOTION ESTIMATION MODULE 1404

SECOND DETERMINING MODULE 1402

FIRST MOTION COMPENSATION MODULE 1405

THIRD DETERMINING MODULE 1403

DECODING APPARATUS 14

FIG. 14

| FOURTH DETERMINING MODULE 1501 | SECOND MOTION ESTIMATION MODULE 1504 |
|---|---|
| FIFTH DETERMINING MODULE 1502 | SECOND MOTION COMPENSATION MODULE 1505 |
| SIXTH DETERMINING MODULE 1503 | ENCODING APPARATUS 15 |

FIG. 15

**ENCODER** 16

FIRST COMMUNICATION INTERFACE 161

164

FIRST PROCESSOR 163

FIRST MEMORY 162

FIG. 16

**DECODER** 17

SECOND COMMUNICATION INTERFACE 171

174

SECOND PROCESSOR 173

SECOND MEMORY 172

FIG. 17

## INTERNATIONAL SEARCH REPORT

| International application No. |
| --- |
| **PCT/CN2023/122609** |

| A. | CLASSIFICATION OF SUBJECT MATTER |
| --- | --- |

H04N 19/567(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CJFD, JVET, IEEE: 帧间, 预测, 运动, 向量, 矢量, 候选, 第一, 第二, 双向, 差, 当前块, 参考块, 预测块, 模板, 匹配, 细化, 精化; inter-frame, prediction, motion, vector, MV, candidate, first, second, bi-directional, difference, SAD, STAD, SSE, current block, CU, reference block, model, match, TM, refinement, DMVR

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022417521 A1 (QUALCOMM INC.) 29 December 2022 (2022-12-29) description, paragraphs [0113]-[0182], [0235]-[0309], and [0346]-[0550]; and figures 7-8 and 12 | 1, 56, 60, 61, 116, 120-127 |
| A | CN 111903134 A (LG ELECTRONICS INC.) 06 November 2020 (2020-11-06) entire document | 1-127 |
| A | CN 111971962 A (MEDIATEK INC.) 20 November 2020 (2020-11-20) entire document | 1-127 |
| A | CN 114365498 A (GUANGDONG OPPO MOBILE TELECOMMUNICATIONS CORP., LTD.) 15 April 2022 (2022-04-15) entire document | 1-127 |
| A | CN 116491119 A (TENCENT AMERICA, LLC) 25 July 2023 (2023-07-25) | 1-127 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 June 2024** | **18 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122609**

| Patent document cited in search report | | | Publication date (day/month/year) | Patent family member(s) | | | Publication date (day/month/year) |
|---|---|---|---|---|---|---|---|
| US | 2022417521 | A1 | 29 December 2022 | EP | 4360318 | A1 | 01 May 2024 |
| | | | | BR | 112023026400 | A2 | 05 March 2024 |
| | | | | KR | 20240026141 | A | 27 February 2024 |
| | | | | TW | 202308391 | A | 16 February 2023 |
| CN | 111903134 | A | 06 November 2020 | CA | 3125551 | A1 | 09 July 2020 |
| | | | | CA | 3125551 | C | 19 December 2023 |
| | | | | US | 2020374512 | A1 | 26 November 2020 |
| | | | | US | 11044468 | B2 | 22 June 2021 |
| | | | | CA | 3219866 | A1 | 09 July 2020 |
| | | | | BR | 112021013071 | A2 | 21 September 2021 |
| | | | | BR | 112021013071 | B1 | 10 May 2022 |
| | | | | US | 2023118101 | A1 | 20 April 2023 |
| | | | | US | 11805246 | B2 | 31 October 2023 |
| | | | | KR | 20240005992 | A | 12 January 2024 |
| | | | | JP | 2021515464 | A | 17 June 2021 |
| | | | | JP | 7184911 | B2 | 06 December 2022 |
| | | | | US | 2021266526 | A1 | 26 August 2021 |
| | | | | US | 11570429 | B2 | 31 January 2023 |
| | | | | WO | 2020141889 | A1 | 09 July 2020 |
| | | | | KR | 20220051414 | A | 26 April 2022 |
| | | | | KR | 102504741 | B1 | 02 March 2023 |
| | | | | RU | 2022107813 | A | 05 April 2022 |
| | | | | AU | 2020205179 | A1 | 02 September 2021 |
| | | | | AU | 2020205179 | B2 | 14 July 2022 |
| | | | | EP | 3742733 | A1 | 25 November 2020 |
| | | | | EP | 3742733 | A4 | 31 March 2021 |
| | | | | KR | 20230034425 | A | 09 March 2023 |
| | | | | KR | 102619088 | B1 | 29 December 2023 |
| | | | | KR | 20200085848 | A | 15 July 2020 |
| | | | | KR | 102398936 | B1 | 17 May 2022 |
| | | | | RU | 2769347 | C1 | 30 March 2022 |
| | | | | JP | 2023015383 | A | 31 January 2023 |
| | | | | JP | 7482344 | B2 | 14 May 2024 |
| | | | | US | 2023362354 | A1 | 09 November 2023 |
| | | | | AU | 2022252845 | A1 | 17 November 2022 |
| | | | | MX | 2021007711 | A | 05 August 2021 |
| CN | 111971962 | A | 20 November 2020 | WO | 2019085892 | A1 | 09 May 2019 |
| | | | | TW | 201919401 | A | 16 May 2019 |
| | | | | TWI | 719356 | B | 21 February 2021 |
| | | | | US | 2019132606 | A1 | 02 May 2019 |
| | | | | US | 11750832 | B2 | 05 September 2023 |
| | | | | EP | 3701718 | A1 | 02 September 2020 |
| | | | | EP | 3701718 | A4 | 19 May 2021 |
| | | | | EP | 3701718 | B1 | 13 December 2023 |
| | | | | KR | 20200078609 | A | 01 July 2020 |
| | | | | KR | 102391337 | B1 | 26 April 2022 |
| CN | 114365498 | A | 15 April 2022 | None | | | |
| CN | 116491119 | A | 25 July 2023 | EP | 4226622 | A1 | 16 August 2023 |
| | | | | KR | 20230104682 | A | 10 July 2023 |
| | | | | JP | 2024507568 | A | 20 February 2024 |

Form PCT/ISA/210 (patent family annex) (July 2022)

**INTERNATIONAL SEARCH REPORT**
Information on patent family members

International application No.

**PCT/CN2023/122609**

| Patent document cited in search report | Publication date (day/month/year) | Patent family member(s) | | Publication date (day/month/year) |
|---|---|---|---|---|
| | | WO 2023059983 | A1 | 13 April 2023 |
| | | US 2023109532 | A1 | 06 April 2023 |

Form PCT/ISA/210 (patent family annex) (July 2022)